# EUROPEAN PATENT APPLICATION

(11) **EP 4 787 785 A1**
(43) Date of publication of application: **05.08.2026**
(21) Application number: 24871938.7
(22) Date of filing: 17.09.2024
(51) Int. Cl.: H04L 12/66, H04L 65/102

(54) **GATEWAY DEVICE**

(30) Priority: 26.09.2023 JP 2023163853
(71) Applicant: Sony Group Corporation, Tokyo 108-0075 (JP)
(72) Inventor: TEZUKA, Hiroyuki, Tokyo 108-0075 (JP); SATOH, Ryosuke, Tokyo 108-0075 (JP); SATO, Takahiko, Yokohama-shi, Kanagawa 223-8522 (JP)
(74) Representative: D Young & Co LLP
(86) International application number: PCT/JP2024/033014
(87) International publication number: WO 2025/070143

(57) **Abstract**

A gateway apparatus according to the present disclosure is a gateway apparatus for connecting a quantum internet and a quantum intranet. The gateway apparatus receives information indicating communication quality between a quantum node and another quantum node, the communication quality being computed in the quantum node in the quantum intranet. The gateway apparatus constructs a routing table of the quantum intranet. The gateway apparatus receives a request from a node in the quantum internet. The gateway apparatus references the routing table of the quantum intranet and transmits, based on the referenced routing table, the request to the quantum node in the quantum intranet.

## Description

### Technical Field

The present disclosure relates to a gateway apparatus.

### Background Art

In recent years, as next-generation communication technology, a quantum network such as a quantum internet has been attracting attention (for example, see NPL 1). For example, the quantum network is a network in which nodes (also referred to as "quantum nodes") that implement quantum information processing technology, such as quantum computers, are connected using optical fibers, free space, or the like to perform communication (also referred to as "quantum communication").

### Citation List

### Non Patent Literature

NPL 1: "Quantum Internet White Paper '"The" Quantum Internet-The Ultimate Cyberspace Permitted by the Physical Laws of the Universe-'", Industry-Government-Academia Collaborative Research and Development Consortium Quantum Internet Task Force <internet> https://qitf.org/files/20210210_qitf_whitepaper.pdf (searched on September 15, 2023)

### Summary

### Technical Problem

However, regarding operation using the quantum network, it is hard to say that sufficient consideration is given from the viewpoint of appropriately performing routing, quantum network construction, maintenance, and the like in communication of information in the quantum network, for example, and there is room for improvement in the operation of the quantum network. Thus, it is desired to enable appropriate operation of the quantum network.

In view of this, in the present disclosure, a gateway apparatus that can enable appropriate operation of the quantum network is proposed.

### Solution to Problem

In order to solve the problem described above, a gateway apparatus of one embodiment according to the present disclosure is a gateway apparatus for connecting a quantum internet and a quantum intranet. The gateway apparatus receives information indicating communication quality between a quantum node and another quantum node, the communication quality being computed in the quantum node in the quantum intranet. The gateway apparatus constructs a routing table of the quantum intranet. The gateway apparatus receives a request from a node in the quantum internet. The gateway apparatus references the routing table of the quantum intranet, and transmits, based on the referenced routing table, the request to the quantum node in the quantum intranet.

### Brief Description of Drawings

[Fig. 1]

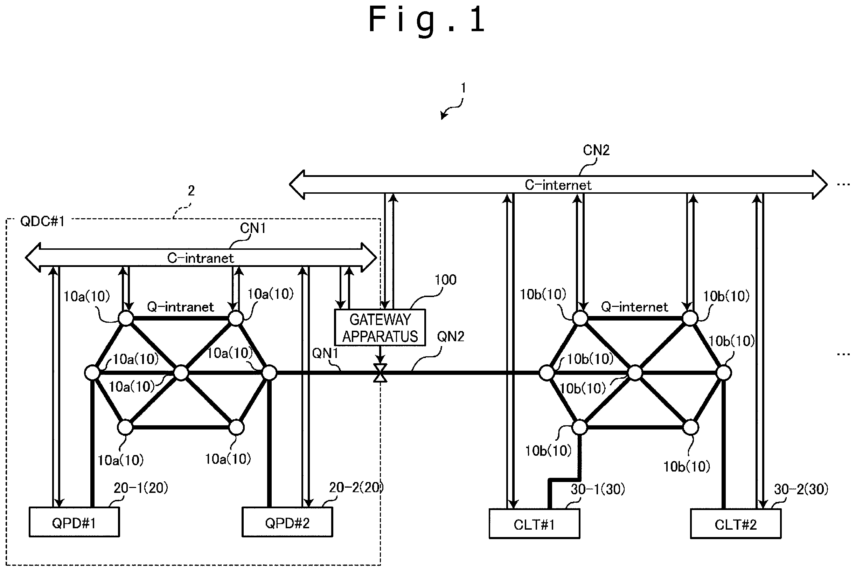

   Fig. 1 is a diagram illustrating a configuration example of an information processing system according to an embodiment of the present disclosure.
[Fig. 2]

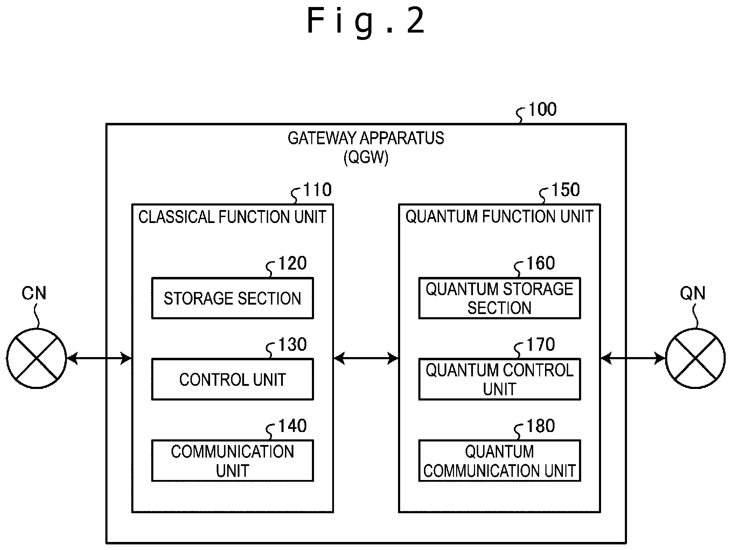

   Fig. 2 is a diagram illustrating a configuration example of a gateway apparatus according to an embodiment of the present disclosure.
[Fig. 3]

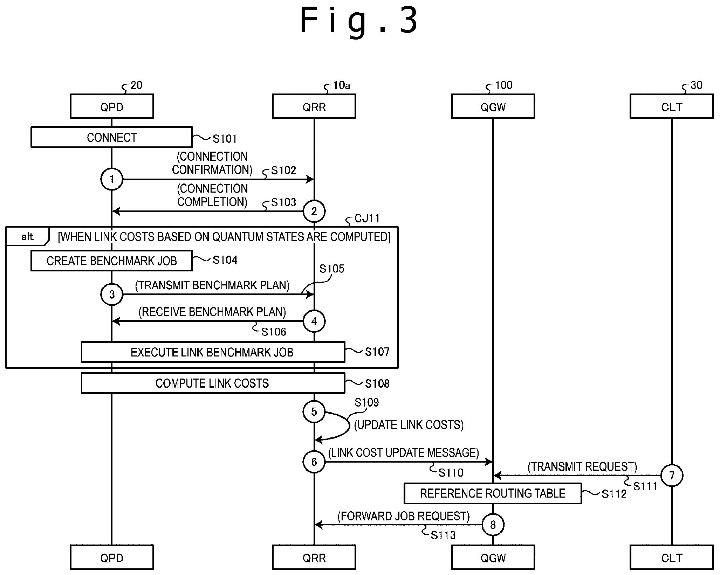

   Fig. 3 is a sequence diagram illustrating an example of processing related to a first task.
[Fig. 4]

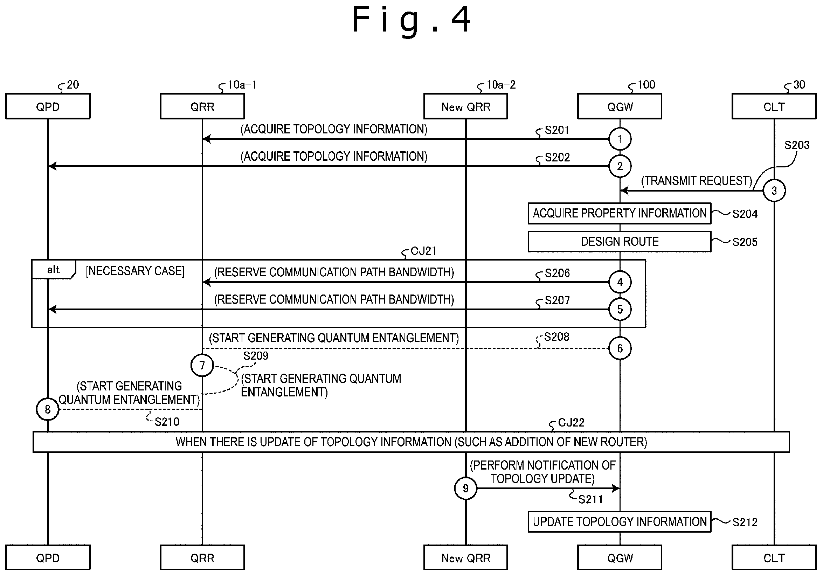

   Fig. 4 is a sequence diagram illustrating an example of processing related to the first task.
[Fig. 5]

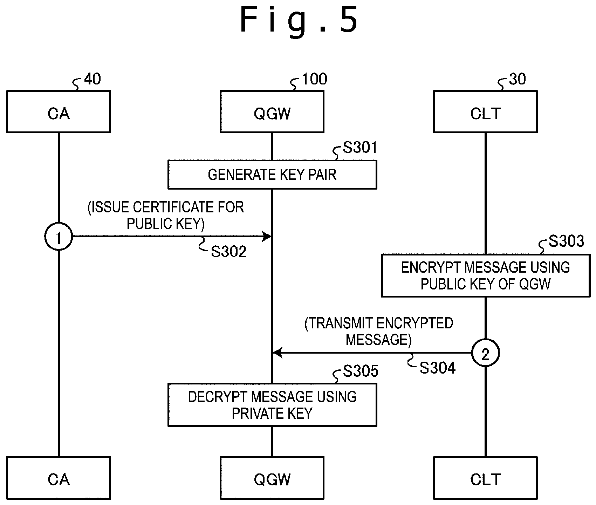

   Fig. 5 is a sequence diagram illustrating an example of processing related to a second task.
[Fig. 6]

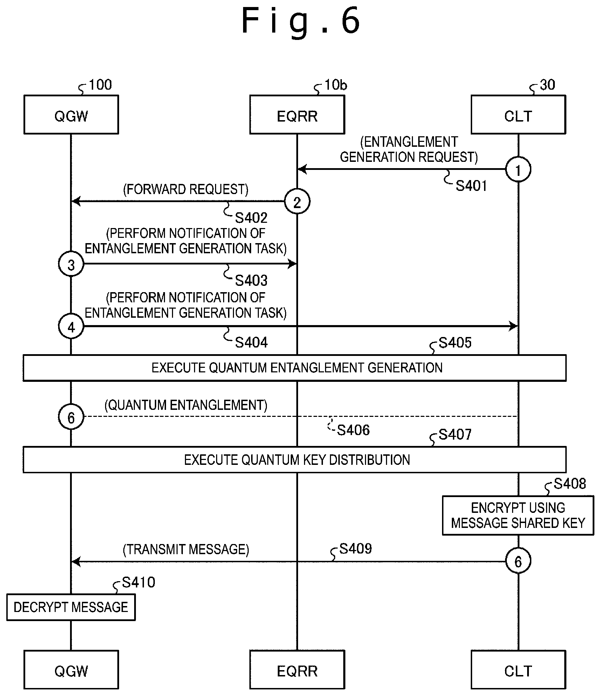

   Fig. 6 is a sequence diagram illustrating an example of processing related to the second task.
[Fig. 7]

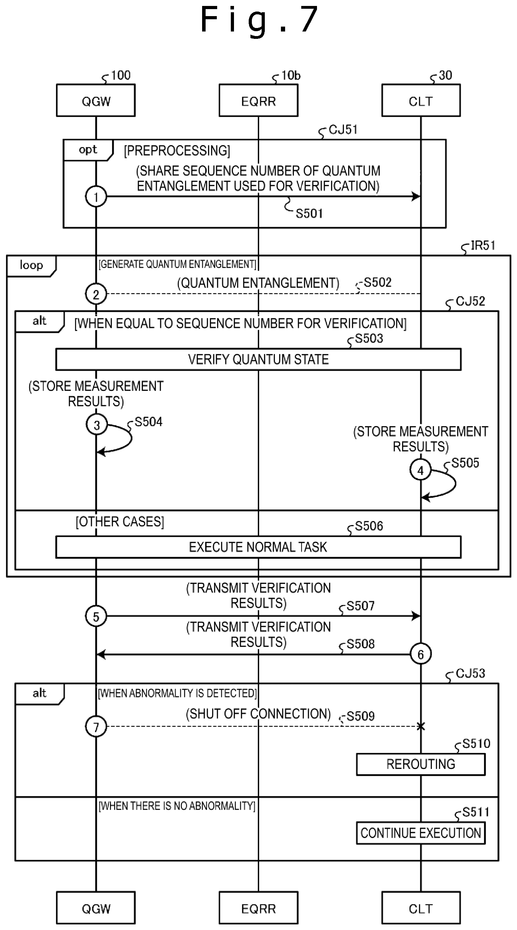

   Fig. 7 is a sequence diagram illustrating an example of processing related to the second task.
[Fig. 8]

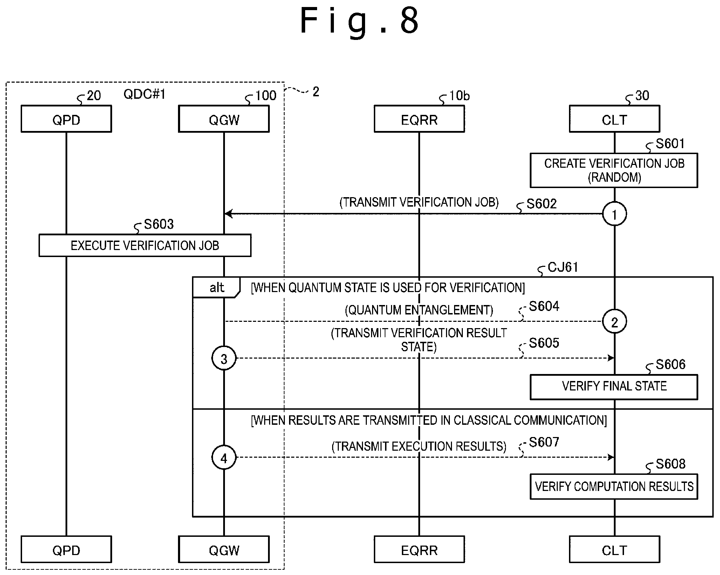

   Fig. 8 is a sequence diagram illustrating an example of processing related to the second task.
[Fig. 9]

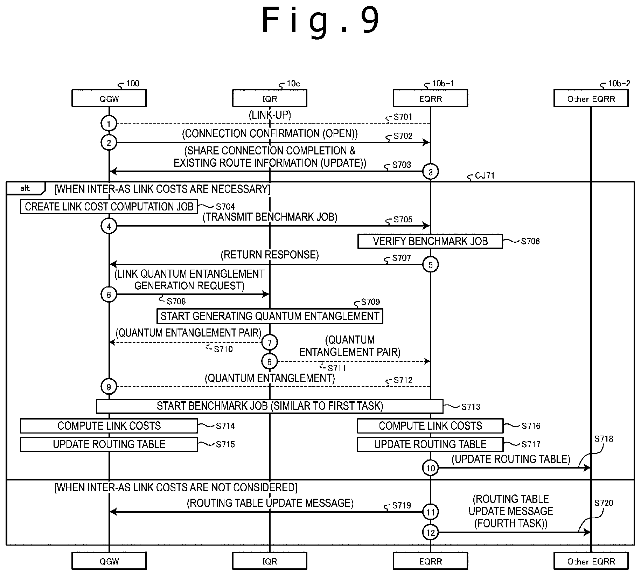

   Fig. 9 is a sequence diagram illustrating an example of processing related to a third task.
[Fig. 10]

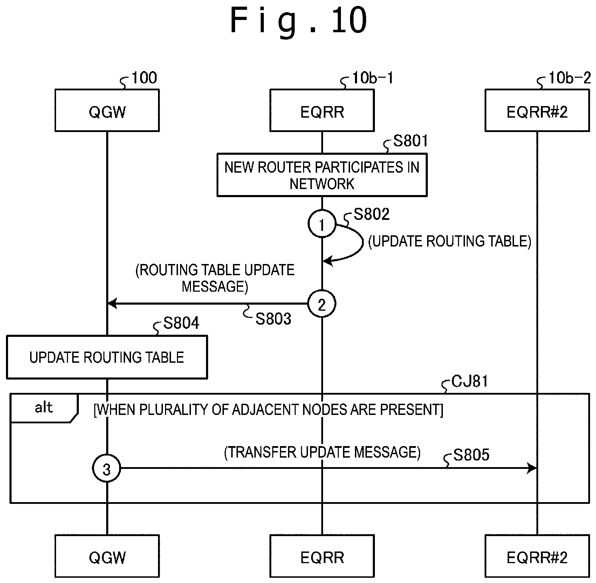

   Fig. 10 is a sequence diagram illustrating an example of processing related to a fourth task.
[Fig. 11]

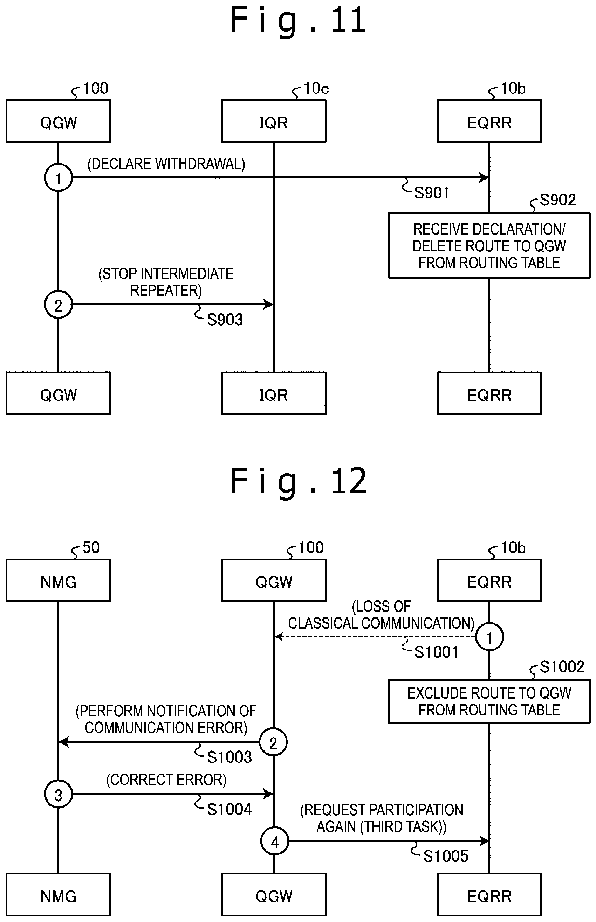

   Fig. 11 is a sequence diagram illustrating an example of processing related to a fifth task.
[Fig. 12]
   Fig. 12 is a sequence diagram illustrating an example of processing related to the fifth task.
[Fig. 13]

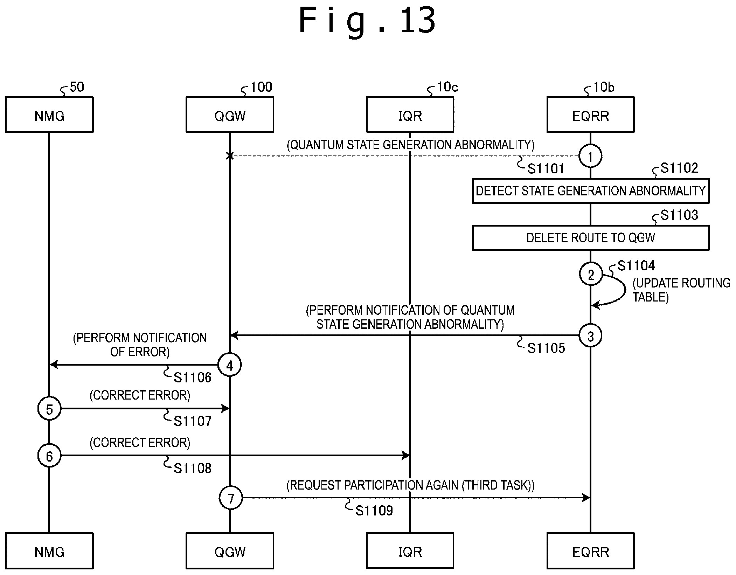

   Fig. 13 is a sequence diagram illustrating an example of processing related to the fifth task.
[Fig. 14]

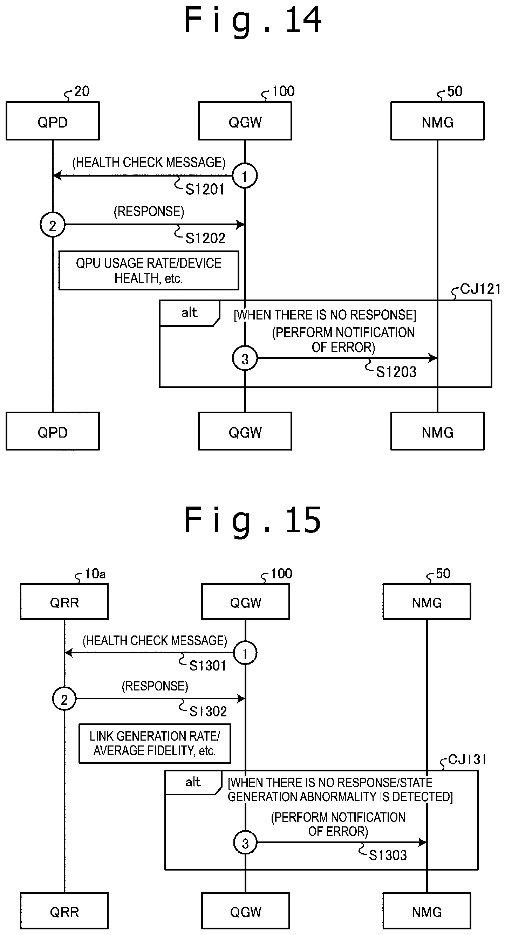

   Fig. 14 is a sequence diagram illustrating an example of processing related to a sixth task.
[Fig. 15]
   Fig. 15 is a sequence diagram illustrating an example of processing related to the sixth task.
[Fig. 16]

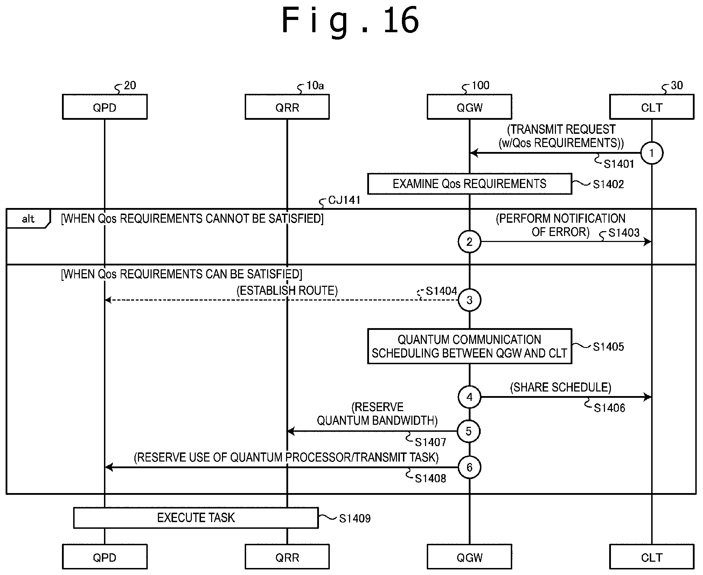

   Fig. 16 is a sequence diagram illustrating an example of processing related to a seventh task.
[Fig. 17]

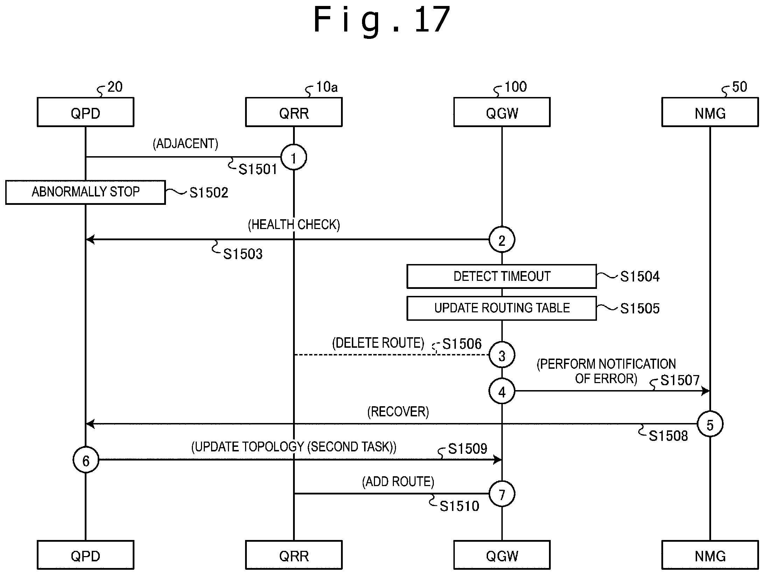

   Fig. 17 is a sequence diagram illustrating an example of processing related to an eighth task.
[Fig. 18]

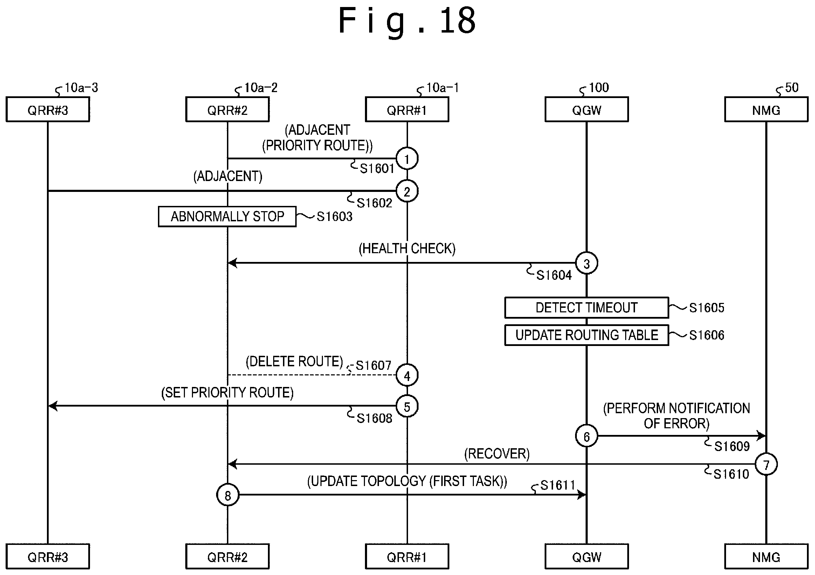

   Fig. 18 is a sequence diagram illustrating an example of processing related to the eighth task.
[Fig. 19]

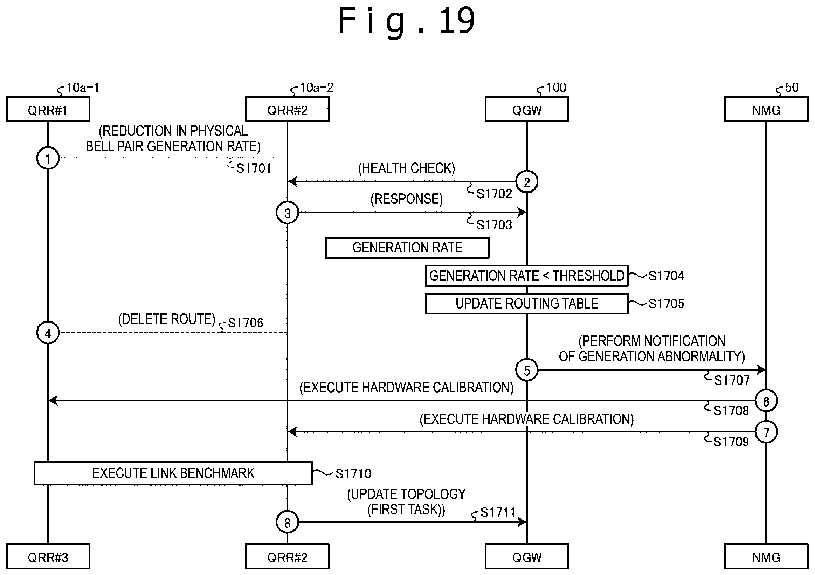

   Fig. 19 is a sequence diagram illustrating an example of processing related to the eighth task.

### Description of Embodiments

Embodiments of the present disclosure will be described below in detail with reference to the drawings. Note that the embodiments are not limited to a gateway apparatus according to the present application. In the following embodiments, the same components are denoted by the same reference numerals, and redundant description thereof will be omitted.

The present disclosure will be described in the order of the following items.
1. Overview
1-1. Quantum and Classics
1-2. Quantum Network
2. Embodiments
2-1. Configuration Example of Information Processing System
2-2. Configuration Example of Gateway Apparatus
2-3. Configuration Example of Other Constituent Elements (Quantum Nodes)
3. Tasks and Processing Examples
3-1. First Task (Routing inside Quantum Data Center)
3-1-1. Overview of First Task
3-1-2. Processing Example Related to First Task
3-1-2-1. Distributed Routing
3-1-2-2. Centralized Routing
3-2. Second Task (Trust Establishment with Client)
3-2-1. Overview of Second Task
3-2-2. Processing Example Related to Second Task
3-2-2-1. Classical Trust Establishment
3-2-2-2. Quantum State Trust Establishment
3-3. Third Task (Participation in Quantum Internet)
3-3-1. Overview of Third Task
3-3-2. Processing Example Related to Third Task
3-4. Fourth Task (Routing outside Quantum Data Center)
3-4-1. Overview of Fourth Task
3-4-2. Processing Example Related to Fourth Task
3-5. Fifth Task (Withdrawal from Quantum Internet)
3-5-1. Overview of Fifth Task
3-5-2. Processing Example Related to Fifth Task
3-5-2-1. Normal Withdrawal
3-5-2-2. Classical Device Failure
3-5-2-3. Quantum Device Failure
3-6. Sixth Task (Monitoring of Internal Information)
3-6-1. Overview of Sixth Task
3-6-2. Processing Example Related to Sixth Task
3-6-2-1. Device Health Check
3-6-2-2. Link Health Check
3-7. Seventh Task (Communication Quality Assurance or Resource Reservation)
3-7-1. Overview of Seventh Task
3-7-2. Processing Example Related to Seventh Task
3-8. Eighth Task (Internal Failure Handling)
3-8-1. Overview of Eighth Task
3-8-2. Processing Example Related to Eighth Task
3-8-2-1. Abnormal Stop of QPD
3-8-2-2. Abnormal Stop of QRR
3-8-2-3. Link Cost Abnormality
3-9. Ninth Task (Logging)
3-9-1. Overview of Ninth Task
3-9-2. Processing Example Related to Ninth Task
4. Additional Notes
5. Effects According to Present Disclosure
6. Hardware Configuration Example

### [1. Overview]

Prior to giving description of the present disclosure, an overview according to the present disclosure will be described.

### [1-1. Quantum and Classics]

In the present disclosure, in order to clearly indicate differences from constituent elements related to quantum, for example, constituent elements (normal constituent elements) that do not apply the principles of quantum mechanics but rely on classical physics may be clearly indicated with the term "classical".

For example, in order to clearly indicate differences from a quantum computer, a normal computer that relies on classical physics may be referred to as a classical computer. For example, the classical computer is a constituent element that performs information processing such as computation (operations) using so-called bits (also referred to as "classical bits"), and the quantum computer is a constituent element that performs information processing such as computation (operations) using quantum bits (quantum states) being bits having a different concept from the classical bits. In the following, a function possessed by the classical computer may be referred to as a classical function, and a function possessed by the quantum computer may be referred to as a quantum function.

For example, in order to clearly indicate differences from a quantum network, a normal network that relies on classical physics may be referred to as a classical network. For example, in order to clearly indicate differences from the quantum internet, a normal internet that relies on classical physics may be referred to as a classical internet. For example, in order to clearly indicate differences from a quantum intranet, a normal intranet that relies on classical physics may be referred to as a classical intranet.

### [1-2. Quantum Network]

The quantum network such as the quantum internet is a technology for transferring quantum states (quantum information) being information handled by quantum nodes such as quantum computers via a network. The quantum states used herein are implemented as physical states of a system represented by photons and the like, for example, and are essentially different from the classical bits (classical information) exchanged in the classical network such as the classical internet, for example. As a difference between the quantum states (quantum information) and the classical information, the greatest problem in implementing the network is that the quantum states cannot be copied due to the quantum no-cloning theorem or the like.

For example, communication (also referred to as "classical communication") of the classical information is performed between distant constituent elements (apparatuses or the like) using optical fibers or the like via the classical network, and when the classical information is exchanged, a repeater is provided midway, and signals that have attenuated due to propagation through the optical fibers or the like are electrically amplified. Such amplification cannot be implemented in the quantum network in principle.

Thus, in order to perform communication (also referred to as "quantum communication") of the quantum information between distant constituent elements and allow relaying midway in exchanging the quantum information, another method is required. As the method, an elemental technology such as quantum entanglement swapping (simply also referred to as "entanglement swapping") is proposed, and active research is being conducted with the aim of implementation of high-quality communication. To utilize a communication network at a maximum, protocols for extracting its performance are established and operated; however, in light of the above circumstances, many protocols for the existing classical network cannot be applied to the quantum network.

In particular, the quantum states are extremely vulnerable to disturbance, and it is necessary to efficiently perform routing of selecting an optimal route on a network and resource generation for implementing quantum entanglement corresponding to maintenance of a communication state in the quantum information. Routing used herein is to determine a route from one node to another node on a network.

For example, quantum entanglement is a correlation between quantum states that cannot be classically reproduced, and is a phenomenon that may be used in, for example, transferring the quantum states through quantum teleportation or the like. Quantum teleportation (simply also referred to as "teleportation") is a protocol for transferring any quantum state to a remote location, including quantum entanglement state generation, measurement, feedback operation, and the like. Entanglement swapping is a protocol for performing measurement on quantum entanglement and performing teleportation of the quantum entanglement, and thereby sharing the quantum entanglement between quantum devices such as quantum nodes that are separated by a plurality of hops.

Incidentally, considering a future in which the quantum internet is developed (laid out) as an analogy to the classical internet, a situation is assumed in which users communicate with a quantum data center via the quantum internet and use computing resources across the network. In this case, from the perspective of the quantum data center, there is a boundary between a synchronously managed intranet on the inside and an asynchronously distributedly operated internet on the outside. When considering a protocol at this boundary interface, as a matter of course, it is necessary to develop a new protocol for the quantum network.

In view of this, on the premise of the quantum network, the present disclosure proposes tasks and processing related to the protocol to be performed by a gateway apparatus (quantum gateway (QGW)) being an example of a device arranged at a boundary between the quantum data center (quantum intranet) and the quantum internet.

### [2. Embodiments]

In the following, an example of embodiments based on the premise as described above will be described.

### [2-1. Configuration Example of Information Processing System]

First, an information processing system 1 illustrated in Fig. 1 will be described. Fig. 1 is a diagram illustrating a configuration example of an information processing system according to an embodiment of the present disclosure. The information processing system 1 is a system for enabling processing using the quantum information.

For example, the information processing system 1 has a function as a quantum network system for communicating the quantum information (quantum states) via the quantum network. The information processing system 1 is a quantum classical hybrid system having both a function as a classical network system for communicating the classical information via the classical network and the function as the quantum network system.

As illustrated in Fig. 1, the information processing system 1 includes constituent elements on the inside of a quantum data center 2 (quantum data center (QDC) #1) (hereinafter also referred to as "constituent elements inside QDC #1") and constituent elements on the outside of QDC #1 (hereinafter also referred to as "constituent elements outside QDC #1").

As the constituent elements inside QDC #1, the quantum data center 2 includes a plurality of quantum repeaters/routers (QRRs) 10a, a plurality of quantum processing devices (QPDs) 20, a gateway apparatus 100, and the like inside the quantum data center 2. For example, the quantum data center 2 constructs a network with a plurality of quantum devices (the QPDs 20 and the like) being connected by quantum links, and provides a service (application) using the quantum network such as distributed quantum computing to clients.

Quantum network resources used herein correspond to quantum entanglement consumed on the network, primarily Bell states. The clients used herein are entities (CLTs 30 and the like to be described later) that request the service. For example, the client such as the CLT 30 may be a quantum computer, a classical computer, or the like of an individual or an organization that requests the service provided by the quantum network.

Note that, although Fig. 1 illustrates seven QRRs 10a, the number of QRRs 10a included in the quantum data center 2 need not be limited to seven and may be any number. Although Fig. 1 illustrates two QPDs 20, i.e., a QPD 20-1 (QPD #1) and a QPD 20-2 (QPD #2), the number of QPDs 20 included in the quantum data center 2 need not be limited to two and may be any number. Note that, when the QPDs 20-1 and 20-2 and the like are not distinguished as in the above, each of them may be referred to as the QPD 20. A plurality of gateway apparatuses 100 (which may be referred to as "QGWs 100") may be included in the quantum data center 2.

In Fig. 1, the constituent elements inside QDC #1 such as the QRRs 10a, the QPDs 20, and the gateway apparatus 100 are connected to be capable of classical communication using a classical intranet CN1. For example, the classical intranet CN1 is a network (intranet) for communicating the classical information inside the quantum data center 2. Note that, regarding a communication mode using the classical intranet CN1, any communication mode can be employed as long as it is capable of classical communication inside the quantum data center 2, and it may be a wired communication mode using optical fibers or the like, or may be a wireless communication mode such as free space.

Note that, due to the illustration, Fig. 1 illustrates only two upper QRRs 10a with connection lines to the classical intranet CN1 regarding the QRRs 10a; however, each QRR 10a having the classical function is connected to be capable of classical communication with other constituent elements (apparatuses or the like) having the classical function inside the quantum data center 2 using the classical intranet CN1.

In Fig. 1, the constituent elements inside QDC #1 such as the QRRs 10a, the QPDs 20, and the gateway apparatus 100 are connected to be capable of quantum communication using a quantum intranet QN1. For example, the quantum intranet QN1 is a network (intranet) for communicating the quantum information inside the quantum data center 2. For example, the quantum intranet QN1 connects the constituent elements inside QDC #1 to quantum communication by using a wired communication mode using optical fibers or the like.

Note that, regarding the communication mode using the quantum intranet QN1, the wired communication mode using optical fibers or the like is not restrictive and any communication mode can be employed as long as it is capable of quantum communication inside the quantum data center 2, and it may be a wireless communication mode such as free space, for example.

For example, each QRR 10a is a constituent element having a function of at least one of a router or a repeater inside the quantum data center 2. For example, the QRR 10a has a function of at least one of a router (quantum router) or a repeater (quantum repeater) in quantum communication. The QRR 10a may have a function of at least one of a router or a repeater in classical communication. For example, the QRR 10a communicates (transfers) the quantum states (quantum information) with other constituent elements by using the technology of quantum teleportation based on quantum entanglement swapping and classical communication.

For example, each QPD 20 is a constituent element having a function as a quantum computer used to execute distributed quantum computing. The QPD 20 includes a processor (quantum processor) or the like that performs quantum computing, such as a quantum processing unit (QPU). In Fig. 1, the QPD 20 is a quantum computing device arranged inside the quantum data center 2, performs various types of quantum computing, and transmits (transfers) its computation results to other constituent elements such as adjacent QRRs 10a.

The gateway apparatus 100 is a constituent element that functions as a gateway of the quantum data center 2. The gateway apparatus 100 is used to connect the quantum intranet to the quantum internet. For example, the gateway apparatus 100 connects the quantum intranet QN1 inside the quantum data center 2 to a quantum internet QN2 to be described later.

Note that the gateway apparatus 100 may have any function depending on the configuration of the quantum data center 2. For example, when the gateway apparatus 100 has a function (authority) as a network controller of the quantum data center 2, the gateway apparatus 100 may have authority to issue commands to all the constituent elements (devices) inside the quantum intranet QN1.

For example, as an end node process of the quantum data center 2, the gateway apparatus 100 may reside on a gateway router of the quantum data center 2, and need not have a function (authority) of directly controlling other constituent elements (the QRRs 10a and the like) inside the quantum intranet QN1. Note that the gateway apparatus 100 may function as the gateway router, or for the gateway apparatus 100, the QRRs 10a arranged at an interface between the quantum data center 2 and the outside may function as the gateway routers. In this case, the gateway apparatus 100 may connect the quantum intranet QN1 to the quantum internet QN2 by controlling the QRRs 10a functioning as the gateway routers.

As the constituent elements outside QDC #1, the information processing system 1 includes external quantum repeaters/routers (EQRRs) 10b being a plurality of QRRs, a plurality of clients (CLTs) 30, and the like outside the quantum data center 2. Note that the constituent elements outside QDC #1 are not limited to the above, and for example, various constituent elements such as intermediate quantum repeaters (IQRs) 10c (see Fig. 9) to be described later may be included. This will be described later. In the following, when the QRRs 10a, the EQRRs 10b, the IQRs 10c (see Fig. 9), and the like are not distinguished in description, each of them may be referred to as a relay node 10. When the relay nodes 10, the QPDs 20, and the like are not distinguished in description, each of them may be referred to as a quantum node.

Note that, although Fig. 1 illustrates seven EQRRs 10b, the number of EQRRs 10b included in the quantum data center 2 need not be limited to seven and may be any number. Although Fig. 1 illustrates two CLTs 30, i.e., a CLT 30-1 (CLT #1) and a CLT 30-2 (CLT #2), the number of CLTs 30 included in the quantum data center 2 need not be limited to two and may be any number. Note that, when the CLTs 30-1 and 30-2 and the like are not distinguished as in the above, each of them may be referred to as the CLT 30.

In Fig. 1, the constituent elements outside QDC #1 such as the EQRRs 10b and the CLTs 30 and the gateway apparatus 100 are connected to be capable of classical communication using the classical internet CN2. For example, the classical internet CN2 is a network (internet) for communicating the classical information outside the quantum data center 2. Note that, regarding a communication mode using the classical internet CN2, any communication mode can be employed as long as it is capable of classical communication outside the quantum data center 2, and it may be a wired communication mode using optical fibers or the like, or may be a wireless communication mode such as free space.

Note that, due to the illustration, Fig. 1 illustrates only two upper EQRRs 10b with connection lines to the classical internet CN2 regarding the EQRRs 10b; however, each EQRR 10b having the classical function is connected to be capable of classical communication with other constituent elements having the classical function outside the quantum data center 2 using the classical internet CN2. Note that, when the networks for performing classical communication, such as the classical intranet CN1 and the classical internet CN2, are not distinguished in description, each of them may be referred to as a classical network CN.

In Fig. 1, the constituent elements outside QDC #1 such as the EQRRs 10b and the CLTs 30 and the gateway apparatus 100 are connected to be capable of quantum communication using the quantum internet QN2. For example, the quantum internet QN2 is a network (internet) for communicating the quantum information outside the quantum data center 2. For example, the quantum internet QN2 connects the constituent elements outside QDC #1 to quantum communication by using a wired communication mode using optical fibers or the like.

Note that, regarding the communication mode using the quantum internet QN2, the wired communication mode using optical fibers or the like is not restrictive and any communication mode can be employed as long as it is capable of quantum communication outside the quantum data center 2, and it may be a wireless communication mode such as free space, for example. When the networks for performing quantum communication, such as the quantum intranet QN1 and the quantum internet QN2, are not distinguished in description, each of them may be referred to as a quantum network QN.

For example, nodes directly connected by undirected lines (bold lines) indicating the quantum networks QN in Fig. 1 may be referred to as adjacent nodes. For example, adjacent nodes are nodes that directly communicate in the quantum networks QN. In Fig. 1, the rightmost EQRR 10b among the seven EQRRs 10b is connected to the CLT 30-2 by the quantum internet QN2, the rightmost EQRR 10b is an adjacent node of the CLT 30-2, and the CLT 30-2 is an adjacent node of the rightmost EQRR 10b. The leftmost QRR 10a among the seven QRRs 10a is connected to the QPD 20-1 by the quantum intranet QN1, the leftmost QRR 10a is an adjacent node of the QPD 20-1, and the QPD 20-1 is an adjacent node of the leftmost QRR 10a.

For example, each EQRR 10b is a constituent element having a function of at least one of a router or a repeater outside the quantum data center 2. For example, the EQRR 10b has a function of at least one of a router (quantum router) or a repeater (quantum repeater) in quantum communication. For example, the EQRR 10b communicates (transfers) the quantum states (quantum information) with other constituent elements by using the technology of quantum teleportation based on quantum entanglement swapping and classical communication.

For example, each CLT 30 is a constituent element that requests a service from the quantum data center 2. For example, the CLT 30 may be a device (quantum device) having a quantum function used by a user outside the quantum data center 2.

In the example of the information processing system 1 of Fig. 1 described above, the relay nodes 10, the QPDs 20, the CLTs 30, the gateway apparatus 100, and the like have both of the classical function and the quantum function. Note that, regarding each of the constituent elements that requires both the functions of the classical function and the quantum function, any configuration can be employed as long as it has both the classical function and the quantum function. This will be described later by taking a configuration of the gateway apparatus 100 as an example.

Note that the above is merely an example, and regarding the information processing system 1, any configuration can be employed as long as it is capable of implementing desired processing. For example, the information processing system 1 may include a certificate authority (CA) 40 functioning as an entity (a certification authority or the like) that issues a certificate in processing related to tasks to be described later. For example, when a network manager (NMG) 50 functioning as a network manager in the processing related to tasks to be described later is a computer, the information processing system 1 may include the NMG 50. Note that, when the gateway apparatus 100 functions as the NMG 50, the information processing system 1 need not include the NMG 50.

### [2-2. Configuration Example of Gateway Apparatus]

Next, a configuration of the gateway apparatus 100 being an example of the gateway apparatus that executes information processing according to an embodiment will be described. Fig. 2 is a diagram illustrating a configuration example of the gateway apparatus according to an embodiment of the present disclosure. Note that the configuration illustrated below is merely an example, and the gateway apparatus 100 may have any configuration, not limited to the configuration illustrated below, as long as it has desired functions. For example, the gateway apparatus 100 need not include a quantum storage section 160. For example, the gateway apparatus 100 may include an input section (for example, a keyboard, a mouse, or the like) that receives various operations from an administrator or the like of the gateway apparatus 100 and a display section (for example, a liquid crystal display or the like) for displaying various types of information.

As illustrated in Fig. 2, the gateway apparatus 100 includes a classical function unit 110 and a quantum function unit 150. For example, the classical function unit 110 and the quantum function unit 150 are connected to each other to be capable of mutually exchanging information via a communication path using any configuration, such as an I/O adapter.

For example, the classical function unit 110 is a constituent element corresponding to a part (classical computer unit) implemented by the classical computer. In Fig. 2, the classical function unit 110 includes a storage section 120, a control unit 130, and a communication unit 140.

The storage section 120 stores various types of information using a classical memory. The storage section 120 is implemented by a random access memory (RAM), a semiconductor memory element such as a flash memory, or a storage apparatus such as a hard disk and an optical disc, for example. The storage section 120 stores various types of information to be used in processing. The storage section 120 stores the classical information. For example, the storage section 120 stores various types of the classical information to be used in processing related to each task of a first task to a ninth task to be described later. For example, the storage section 120 stores various types of information such as a routing table and a threshold to be used in the processing related to the tasks. The routing table used herein is a table (information) that stores an address of a destination node (an apparatus or the like) and information related to a route, for example.

As the control unit 130, a processor (classical processor) performing classical computing, a circuit, or the like may be used. The control unit 130 is implemented when a program (for example, an information processing program, such as an information processing program according to the present disclosure) stored in the gateway apparatus 100 is executed by a central processing unit (CPU), a micro processing unit (MPU), a graphics processing unit (GPU), or the like with a random access memory (RAM) or the like being a work area, for example. The control unit 130 is implemented by an integrated circuit such as an application specific integrated circuit (ASIC) and a field programmable gate array (FPGA), for example.

The control unit 130 executes processing by using information received from other constituent elements. The control unit 130 executes processing by using information stored in the storage section 120. The control unit 130 acquires various types of information from other constituent elements or the storage section 120.

The control unit 130 executes various types of processing related to the classical function. The control unit 130 executes classical computing. For example, the control unit 130 executes processing related to the classical function out of the processing related to each task of the first task to the ninth task to be described later. For example, the control unit 130 executes the processing related to each task by using various types of information such as a routing table and a threshold stored in the storage section 120.

The control unit 130 may control the quantum function unit 150. In this case, the control unit 130 may transmit a control signal or the like to the quantum function unit 150, and acquire processing results such as computation results (measurement results) obtained by the quantum function unit 150 from the quantum function unit 150.

The communication unit 140 is implemented by a network interface card (NIC) or the like, for example. The communication unit 140 is connected to the classical network CN in a wired or wireless manner, and performs communication of information with other constituent elements. For example, the communication unit 140 performs communication of the classical information with other constituent elements.

The communication unit 140 is connected to the classical intranet CN1 in a wired or wireless manner, and performs communication of information with the constituent elements inside the quantum data center 2. The communication unit 140 performs communication of information with the relay nodes 10 (the QRRs 10a and the like), the QPDs 20, and the like inside the quantum data center 2 via the classical intranet CN1.

The communication unit 140 is connected to the classical internet CN2 in a wired or wireless manner, and performs communication of information with the constituent elements outside the quantum data center 2. The communication unit 140 performs communication of information with the relay nodes 10 (the EQRRs 10b, the IQRs 10c, and the like) and the like outside the quantum data center 2 via the classical internet CN2.

The communication unit 140 transmits various types of information. The communication unit 140 transmits the classical information to other constituent elements. The communication unit 140 receives various types of information. The communication unit 140 receives the classical information from other constituent elements.

For example, the quantum function unit 150 is a constituent element corresponding to a part (quantum computer unit) implemented by the quantum computer. In Fig. 2, the quantum function unit 150 includes a quantum storage section 160, a quantum control unit 170, and a quantum communication unit 180. Note that the units such as the quantum storage section 160, the quantum control unit 170, and the quantum communication unit 180 are divided according to their functions, and may have a common configuration as hardware. For example, the quantum storage section 160 and the quantum control unit 170 may be implemented by the QPU.

The quantum storage section 160 has a function as a memory (quantum memory) capable of storing states of quantum bits. The quantum storage section 160 stores the quantum information. For example, the quantum storage section 160 stores various types of the quantum information to be used in the processing related to each task of the first task to the ninth task to be described later. For example, the quantum storage section 160 stores states of quantum entanglement.

As the quantum control unit 170, a processor (quantum processor) or the like that performs quantum computing may be used. The quantum control unit 170 executes processing by using information received from other constituent elements. The quantum control unit 170 executes processing by using information stored in the quantum storage section 160. The quantum control unit 170 acquires various types of information from other constituent elements or the quantum storage section 160.

The quantum control unit 170 executes various types of processing related to the quantum function. The quantum control unit 170 executes quantum computing. For example, the quantum control unit 170 executes processing related to the quantum function out of the processing related to each task of the first task to the ninth task to be described later.

The quantum communication unit 180 is implemented by a quantum NIC or the like, for example. The quantum communication unit 180 is connected to the quantum network QN in a wired or wireless manner, and performs communication of information with other constituent elements. For example, the quantum communication unit 180 performs communication of the quantum information with other constituent elements.

The quantum communication unit 180 is connected to the quantum intranet QN1 in a wired or wireless manner, and performs communication of information with the constituent elements inside the quantum data center 2. The quantum communication unit 180 performs communication of information with the relay nodes 10 (the QRRs 10a and the like), the QPDs 20, and the like inside the quantum data center 2 via the quantum intranet QN1.

The quantum communication unit 180 is connected to the quantum internet QN2 in a wired or wireless manner, and performs communication of information with the constituent elements outside the quantum data center 2. The quantum communication unit 180 performs communication of information with the relay nodes 10 (the EQRRs 10b, the IQRs 10c, and the like) and the like outside the quantum data center 2 via the quantum internet QN2.

The quantum communication unit 180 transmits various types of information. The quantum communication unit 180 transmits the quantum information to other constituent elements. The quantum communication unit 180 receives various types of information. The quantum communication unit 180 receives the quantum information from other constituent elements.

Note that the quantum function unit 150 may have a function as the classical computer for controlling quantum computing in the quantum function unit 150. In this case, the quantum function unit 150 may be a classical control unit that transmits a control signal or the like to the quantum control unit 170 and acquires processing results such as computation results (measurement results) obtained by the quantum function unit 150 from the quantum function unit 150. In this case, the quantum function unit 150 may communicate the classical information with the classical function unit 110 via the classical control unit.

The configuration described above is an example, and the gateway apparatus 100 is not limited to the configuration that includes the classical function unit 110 and the quantum function unit 150 as an integral apparatus, and may be any configuration such as a configuration in which the classical function unit 110 and the quantum function unit 150 are distributedly arranged and are connected to be capable of communicating with each other. In this manner, the classical function unit 110 and the quantum function unit 150 need not be implemented by a single computer (apparatus), and may be implemented by being distributed in a plurality of computers (apparatuses) that are connected by a network.

### [2-3. Configuration Example of Other Constituent Elements (Quantum Nodes)]

Here, configurations of the quantum nodes, such as the relay nodes 10 and the QPDs 20, being constituent elements other than the gateway apparatus 100 will be described. In the following, by taking the relay node 10 as an example, a configuration example of a case in which the quantum node has both the functions of the classical function and the quantum function will be described. Note that description of details similar to the above-described details will be omitted as appropriate.

The relay node 10 includes a classical function unit and a quantum function unit. For example, the classical function unit and the quantum function unit are connected to each other to be capable of mutually exchanging information via a communication path using any configuration, such as an I/O adapter. The classical function unit of the relay node 10 includes a storage section, a control unit, and a communication unit.

The storage section stores various types of information using a classical memory. The storage section is implemented by a RAM, a semiconductor memory element such as a flash memory, or a storage apparatus such as a hard disk and an optical disc, for example. The storage section stores various types of information to be used in processing. The storage section stores the classical information. For example, the storage section stores various types of the classical information to be used in processing related to each task of the first task to the ninth task to be described later.

As the control unit, a processor (classical processor) performing classical computing, a circuit, or the like may be used. The control unit is implemented when a program stored in the relay node 10 is executed by a CPU, an MPU, a GPU, or the like with a RAM or the like being a work area, for example. The control unit is implemented by an integrated circuit such as an ASIC and an FPGA, for example.

The control unit executes processing by using information received from other constituent elements. The control unit executes processing by using information stored in the storage section. The control unit acquires various types of information from other constituent elements or the storage section.

The control unit executes various types of processing related to the classical function. The control unit executes classical computing. For example, the control unit executes processing related to the classical function out of the processing related to each task of the first task to the ninth task to be described later. For example, the control unit executes the processing related to each task by using various types of information such as a routing table and a threshold stored in the storage section.

The control unit may control the quantum function unit. In this case, the control unit may transmit a control signal or the like to the quantum function unit, and acquire processing results such as computation results (measurement results) obtained by the quantum function unit from the quantum function unit.

The communication unit is implemented by a NIC or the like, for example. The communication unit is connected to the classical network CN in a wired or wireless manner, and performs communication of information with other constituent elements. For example, the communication unit performs communication of the classical information with other constituent elements such as the gateway apparatus 100.

When the relay node 10 is the QRR 10a, the communication unit is connected to the classical intranet CN1 in a wired or wireless manner, and performs communication of information with the constituent elements inside the quantum data center 2. The communication unit performs communication of information with the relay nodes 10 (the QRRs 10a and the like), the QPDs 20, and the like inside the quantum data center 2 via the classical intranet CN1.

When the relay node 10 is the EQRR 10b or the IQR 10c, the communication unit is connected to the classical internet CN2 in a wired or wireless manner, and performs communication of information with the constituent elements outside the quantum data center 2. The communication unit performs communication of information with the relay nodes 10 (the EQRRs 10b, the IQRs 10c, or the like) and the like outside the quantum data center 2 via the classical internet CN2.

The communication unit transmits various types of information. The communication unit transmits the classical information to other constituent elements. The communication unit receives various types of information. The communication unit receives the classical information from other constituent elements.

The quantum function unit of the relay node 10 includes a quantum storage section, a quantum control unit, and a quantum communication unit. Note that the units such as the quantum storage section, the quantum control unit, and the quantum communication unit are divided according to their functions, and may have a common configuration as hardware. For example, the quantum storage section and the quantum control unit may be implemented by the QPU.

The quantum storage section has a function as a memory (quantum memory) capable of storing states of quantum bits. The quantum storage section stores the quantum information. For example, the quantum storage section stores various types of the quantum information to be used in the processing related to each task of the first task to the ninth task to be described later. For example, the quantum storage section stores states of quantum entanglement.

As the quantum control unit, a processor (quantum processor) or the like that performs quantum computing may be used. The quantum control unit executes processing by using information received from other constituent elements. The quantum control unit executes processing by using information stored in the quantum storage section. The quantum control unit acquires various types of information from other constituent elements or the quantum storage section.

The quantum control unit executes various types of processing related to the quantum function. The quantum control unit executes quantum computing. For example, the quantum control unit executes processing related to the quantum function out of the processing related to each task of the first task to the ninth task to be described later.

The quantum communication unit is implemented by a quantum NIC or the like, for example. The quantum communication unit is connected to the quantum network QN in a wired or wireless manner, and performs communication of information with other constituent elements. For example, the quantum communication unit performs communication of the quantum information with other constituent elements such as the gateway apparatus 100.

When the relay node 10 is the QRR 10a, the quantum communication unit is connected to the quantum intranet QN1 in a wired or wireless manner, and performs communication of information with the constituent elements inside the quantum data center 2. The quantum communication unit performs communication of information with the relay nodes 10 (the QRRs 10a and the like), the QPDs 20, and the like inside the quantum data center 2 via the quantum intranet QN1.

When the relay node 10 is the EQRR 10b or the IQR 10c, the quantum communication unit is connected to the quantum internet QN2 in a wired or wireless manner, and performs communication of information with the constituent elements outside the quantum data center 2. The quantum communication unit performs communication of information with the relay nodes 10 (the EQRRs 10b, the IQRs 10c, or the like) and the like outside the quantum data center 2 via the quantum internet QN2.

The quantum communication unit transmits various types of information. The quantum communication unit transmits the quantum information to other constituent elements. The quantum communication unit receives various types of information. The quantum communication unit receives the quantum information from other constituent elements.

Note that the quantum function unit may have a function as the classical computer for controlling quantum computing in the quantum function unit. In this case, the quantum function unit may be a classical control unit that transmits a control signal or the like to the quantum control unit and acquires processing results such as computation results (measurement results) obtained by the quantum function unit from the quantum function unit. In this case, the quantum function unit may communicate the classical information with the classical function unit via the classical control unit.

The configuration described above is an example, and the relay node 10 is not limited to the configuration that includes the classical function unit and the quantum function unit as an integral apparatus, and may be any configuration such as a configuration in which the classical function unit and the quantum function unit are distributedly arranged and are connected to be capable of communicating with each other. In this manner, the classical function unit and the quantum function unit need not be implemented by a single computer (apparatus), and may be implemented by being distributed in a plurality of computers (apparatuses) that are connected by a network. The QPD 20 as a processing entity of distributed quantum computing also includes a classical function unit and a quantum function unit and executes desired functions, similarly to the relay node 10.

### [3. Tasks and Processing Examples]

In the following, on the premise of the details described above, examples of processing executed by the information processing system 1 including the gateway apparatus 100 and the like will be described. Although the following describes a flow of processing executed by the information processing system 1 regarding the first task to the ninth task, respective processing may be combined in an appropriate aspect as long as the processing can be executed in combination. Respective processing described below may be performed not only by the processing entities illustrated in respective figures but also by any apparatus capable of processing out of the apparatuses included in the information processing system 1, depending on an apparatus configuration included in the information processing system 1. Note that description of details similar to the above-described details will be omitted as appropriate.

### [3-1. First Task (Routing inside Quantum Data Center)]

### [3-1-1. Overview of First Task]

First, an overview of the first task will be described. Note that description of details similar to the above-described details will be omitted as appropriate. The first task is a task related to routing inside the quantum data center. One of the points in the first task is selecting a route that satisfies computational resources necessary for job execution, for example. Another point in the first task is that routing algorithms and policies are essentially not an issue, for example. For example, another point in the first task is that quantum link costs are added as link costs.

As the link costs used herein, any value used in routing, such as network bandwidth, can be employed, and in a case of link costs related to quantum, a Bell state generation rate, fidelity, or the like may be used. For example, another point in the first task is that, when internal information can be completely monitored, topology is completely known, and thus individual nodes need not participate in routing.

The first task may be premised on the following. For example, the QGW interacts (communicates) with clients as an end node (a constituent element or the like at the interface between the inside and the outside of the quantum data center). For example, behind the QGW (inside the quantum data center), a plurality of quantum nodes (quantum computers or the like) are clustered. For example, quantum topology and classical topology correspond to each other on a 1:1 basis.

### [3-1-2. Processing Example Related to First Task]

In the following, with reference to Fig. 3 and Fig. 4, a processing example related to the first task will be described. Fig. 3 and Fig. 4 are each a sequence diagram illustrating an example of processing related to the first task. The information processing system 1 executes the following processing for the first task.

### [3-1-2-1. Distributed Routing]

First, an example of specific processing illustrated in Fig. 3 will be described. Fig. 3 illustrates an example of processing of distributed routing, and illustrates a case in which each repeater distributedly manages a routing table, transfers messages based on the routing table, and generates quantum entanglement.

In Fig. 3, in the information processing system 1, the QPD 20 and the QRR 10a perform processing related to connection (Step S101). For example, the QPD 20 and the QRR 10a being an adjacent node of the QPD 20 perform processing related to connection. In Fig. 3, the QPD 20 performs connection confirmation with the QRR 10a (Step S102). Then, the QRR 10a notifies the QPD 20 of connection completion (Step S103). In the above processing, for example, at the time when the QPD 20 is connected to an adjacent node and is activated, a connection confirmation message is transmitted to the adjacent node. The adjacent node that has received the connection confirmation message transmits a connection completion message to the QPD 20. Note that the above processing may be a message exchange at the start of a general classical routing algorithm such as Hello packets in Open Shortest Path First (OSPF), for example.

In the information processing system 1, when link costs based on the quantum states are computed, processing of Steps S104 to S107 illustrated in a branch CJ11 is executed. First, the QPD 20 creates a benchmark job (Step S104). For example, the benchmark job may be remote state verification or the like such as quantum tomography between two nodes. For example, quantum tomography is a method of performing estimation of the quantum states. For example, the QPD 20 performs tomography or other benchmarks with the adjacent node, but need not perform them when the number of hops is counted as costs or the like.

The QPD 20 transmits a benchmark plan to the QRR 10a (Step S105). Then, the QRR 10a notifies the QPD 20 of reception of the benchmark plan (Step S106). The QPD 20 and the QRR 10a execute the link benchmark job (Step S107).

Note that the benchmark jobs are disclosed in the following literature as related literature, for example.
- Eisert, Jens, et al. "Quantum certification and benchmarking." Nature Reviews Physics 2.7 (2020):382-390.
- Bendersky, Ariel, Fernando Pastawski, and Juan Pablo Paz. "Selective and efficient estimation of parameters for quantum process tomography." Physical review letters 100.19 (2008):190403.

Definitions of quantum benchmark jobs and costs are disclosed in the following literature regarding link-local costs, for example.
- Van Meter, Rodney, et al. "Path selection for quantum repeater networks." Networking Science 3 (2013):82-95.

Then, the QPD 20 and the QRR 10a execute computation of link costs (Step S108). For example, the QRR 10a executes computation of link costs. The QRR 10a updates the link costs (Step S109). Then, the QRR 10a transmits a link cost update message to the QGW 100 (Step S110). For example, the QRR 10a transmits the computed link costs to the QGW 100 as the link cost update message. The above processing may be similar to a normal classical routing table update method. For example, each node in QDC #1 sequentially updates the link costs, and updates the link costs up to the QGW 100.

In this manner, in the information processing system 1, update of the link costs between the nodes in QDC #1 is executed. For example, the QGW 100 updates the routing table, based on information on the link costs between the nodes described above.

In the information processing system 1, the CLT 30 transmits a request to the QGW 100 (Step S111). For example, the CLT 30 transmits the request to the QGW 100 via the quantum internet QN2. For example, the QGW 100 receives the request (message) from the CLT 30 such as a classical client.

Then, the QGW 100 references the routing table (Step S112), and forwards the job request to the QRR 10a (Step S113). For example, the QGW 100 forwards the job request to the QRR 10a as an adjacent node, based on the routing table. For example, at the time point of receiving the request from the CLT 30, the QGW 100 references the routing table, and forwards the request to an optimal path.

### [3-1-2-2. Centralized Routing]

Next, an example of specific processing illustrated in Fig. 4 will be described. Fig. 4 illustrates an example of processing of centralized routing. Note that, in Fig. 4, description will be given based on the assumption that a QRR included in QDC #1 is a QRR 10a-1 and a New QRR newly added to QDC #1 is a QRR 10a-2; however, when they are not particularly distinguished in description, each of them is described as the QRR 10a.

In Fig. 4, in the information processing system 1, in the information processing system 1, the QGW 100 functions as a network controller. For example, the QGW 100 may function similarly to a normal classical network controller or the like. The QGW 100 requests acquisition of topology information or the like from the QRR 10a-1, and acquires the topology information or the like from the QRR 10a-1 (Step S201). The QGW 100 requests acquisition of topology information or the like from the QPD 20, and acquires the topology information or the like from the QPD 20 (Step S202). For example, at the time of being activated as the network controller, the QGW 100 acquires the topology information and information related to respective link costs. Note that, at the time point when the network is activated, the QGW 100 may set all of the routing table, the link costs, and the like of each node, and transfer the request based on the set link costs and routing table.

In the information processing system 1, the CLT 30 transmits a request to the QGW 100 (Step S203). Then, the QGW 100 acquires property information (Step S204), and designs a route (Step S205). For example, the QGW 100 receives the request through classical communication. The QGW 100 performs header reading and the like as acquisition of the property information. For example, the QGW 100 attaches necessary header information to the request from the CLT 30, based on specific properties such as billing access and an application type.

In the information processing system 1, when bandwidth reservation is necessary, processing of Steps S206 and S207 illustrated in a branch CJ21 is executed. For example, the QGW 100 reserves quantum resources on the route as necessary. The QGW 100 reserves communication path bandwidth for the QRR 10a-1 (Step S206). The QGW 100 reserves communication path bandwidth for the QPD 20 (Step S207). Note that this may be an extension (similar processing) of classical quality of service (QoS). For example, the QoS may be quality requirements such as bandwidth and a clock applied to a specific application.

Then, in the information processing system 1, the QGW 100 and the QRR 10a-1 start generating quantum entanglement (Step S208). For example, the QGW 100 and the QRR 10a-1 being an adjacent node of the QGW 100 start generating quantum entanglement. The adjacent QRR 10a-1 starts generating quantum entanglement (Step S209). For example, the adjacent QRR 10a-1 on the route from the QGW 100 to the QPD 20 starts generating quantum entanglement. Then, the QRR 10a-1 and the QPD 20 start generating quantum entanglement (Step S210). For example, the QPD 20 and the QRR 10a-1 being an adjacent node of the QPD 20 start generating quantum entanglement.

Note that generation of quantum entanglement is disclosed in the following literature as related literature, for example.
- Chakraborty, Kaushik, et al. "Entanglement distribution in a quantum network: A multicommodity flow-based approach." IEEE Transactions on Quantum Engineering 1 (2020):1-21.
- Caleffi, Marcello. "Optimal routing for quantum networks." Ieee Access 5 (2017):22299-22312.
- Schoute, Eddie, et al. "Shortcuts to quantum network routing." arXiv preprint arXiv:1610.05238 (2016).
- Kozlowski, Wojciech, Axel Dahlberg, and Stephanie Wehner. "Designing a quantum network protocol. " Proceedings of the 16th international conference on emerging networking experiments and technologies. 2020.

In the information processing system 1, when there is an update of the topology information, such as an addition of a new router, processing of Steps S211 and S212 illustrated after a condition CJ22 is executed. For example, the QRR 10a-2 as the New QRR newly added to QDC #1 notifies the QGW 100 of the topology update (Step S211). The QGW 100 updates the topology information (Step S212). For example, when there is an update in the topology, the QGW 100 updates information such as the topology information and the link costs.

As described above, when routing inside the quantum data center 2 is performed in the first task, the gateway apparatus 100 can select optimal routing between the QPD 20 and the QGW 100. Therefore, the gateway apparatus 100 can enable appropriate operation of the quantum network. For example, the gateway apparatus 100 (QGW 100) receives information indicating communication quality between a quantum node and another quantum node computed in the quantum node in the quantum intranet, constructs a routing table of the quantum intranet, receives a request from a node in the quantum internet, and references the routing table of the quantum intranet, and transmits, based on the referenced routing table, the request to the quantum node in the quantum intranet.

### [3-2. Second Task (Trust Establishment with Client)]

### [3-2-1. Overview of Second Task]

Next, an overview of the second task will be described. Note that description of details similar to the above-described details, such as the details described in other tasks, will be omitted as appropriate. The second task is a task related to trust establishment with a client. One of the points in the second task is defining a protocol that can ensure that a connection destination of the CLT has appropriate computational power and is trustworthy, for example.

The second task may be premised on the following. For example, trust establishment may include classical trust establishment, such as confirmation of authenticity of a message and a sender, and quantum trust establishment, such as proof of authenticity of generated states.

### [3-2-2. Processing Example Related to Second Task]

In the following, with reference to Fig. 5 to Fig. 8, a processing example related to the second task will be described. Fig. 5 to Fig. 8 are each a sequence diagram illustrating an example of processing related to the second task. The information processing system 1 executes the following processing for the second task.

### [3-2-2-1. Classical Trust Establishment]

First, with reference to Fig. 5 and Fig. 6, an example of classical trust establishment will be described. Fig. 5 illustrates an example of specific processing when quantum key distribution is not used. Fig. 6 illustrates an example of specific processing when quantum entanglement-based quantum key distribution is used.

In Fig. 5, in the information processing system 1, the QGW 100 generates a key pair (Step S301). The CA 40 issues a certificate for a public key to the QGW 100 (Step S302). For example, the QGW 100 requests the CA 40 to issue a certificate for the public key, and the CA 40 that has received the request issues the certificate for the public key to the QGW 100.

The CLT 30 encrypts a message by using the public key of the QGW 100 (Step S303). The CLT 30 encrypts the message by using and utilizing the public key of the QGW 100 acquired by any means. For example, the CLT 30 may request the QGW 100 to provide the public key, and the QGW 100 that has received the request may transmit the public key to the CLT 30.

Note that the use of public key cryptosystems is disclosed in the following literature as related literature, for example.
- Rivest, Ronald L., Adi Shamir, and Leonard Adleman. "A method for obtaining digital signatures and public-key cryptosystems." Communications of the ACM 21.2 (1978):120-126.

The CLT 30 transmits the encrypted message to the QGW 100 (Step S304). Then, the QGW 100 decrypts the message by using a private key (Step S305). For example, the QGW 100 decrypts the message received from the CLT 30 by using the private key corresponding to the public key that is used by the CLT 30 for encryption.

In this manner, when quantum key distribution is not used, in the information processing system 1, the QGW 100 issues a certificate for the public key of its own. Then, the CLT 30 encrypts a message by using the public key of the QGW 100. Then, the QGW 100 decrypts the encrypted message by using the private key.

In Fig. 6, in the information processing system 1, the CLT 30 transmits an entanglement generation request to the EQRR 10b (Step S401). For example, the CLT 30 transmits a quantum entanglement generation request to the EQRR 10b via the quantum internet QN2. The EQRR 10b that has received the entanglement generation request forwards the entanglement generation request to the QGW 100 (Step S402).

The QGW 100 that has received the entanglement generation request notifies the EQRR 10b of an entanglement generation task (Step S403). For example, the QGW 100 notifies the EQRR 10b on the route between the CLT 30 as a requester and the QGW 100 of the entanglement generation task. The QGW 100 notifies the CLT 30 of the entanglement generation task (Step S404). For example, the QGW 100 notifies the CLT 30 as a requester of the entanglement generation task.

The QGW 100, the EQRR 10b, and the CLT 30 start executing quantum entanglement generation (Step S405). In this manner, the QGW 100, the EQRR 10b, and the CLT 30 generate quantum entanglement (Step S406). For example, the QGW 100, the CLT 30, and the EQRR 10b on the route between the CLT 30 and the QGW 100 execute quantum entanglement generation and generate quantum entanglement.

Then, the QGW 100, the EQRR 10b, and the CLT 30 execute quantum key distribution (Step S407). For example, the QGW 100 distributes (transmits) a key (a message shared key or the like) to be used by the CLT 30 for encryption by using the quantum entanglement. The CLT 30 encrypts a message by using the message shared key provided from the QGW 100 (Step S408).

Note that quantum key distribution methods are disclosed in the following literature as related literature, for example.
- Ekert, Artur K. "Quantum cryptography based on Bell's theorem." Physical review letters 67.6 (1991):661.
- Ribordy, Gregoire, et al. "Long-distance entanglement-based quantum key distribution." Physical Review A 63.1 (2000):012309.

The CLT 30 transmits the encrypted message to the QGW 100 (Step S409). Then, the QGW 100 decrypts the message by using the private key (Step S410). For example, the QGW 100 decrypts the message received from the CLT 30 by using a key corresponding to the key that is used by the CLT 30 for encryption.

In this manner, when quantum key distribution is used, in the information processing system 1, the CLT 30 transmits a request for performing quantum entanglement generation to the QGW 100. Then, when accepting entanglement generation, the QGW 100 returns a generation job. Then, the CLT 30, the QGW 100, and the EQRR 10b generate quantum entanglement between the CLT 30 and the QGW 100. Then, the CLT 30 and the QGW 100 share a key by using the entanglement.

### [3-2-2-2. Quantum State Trust Establishment]

Next, with reference to Fig. 7 and Fig. 8, an example of quantum state trust establishment will be described. For example, quantum state trust establishment is performed by verifying that generated quantum states are correct quantum states. Fig. 7 illustrates an example of specific processing of communication path verification. Fig. 8 illustrates an example of specific processing of computer verification.

First, processing related to communication path verification of Fig. 7 will be described. In Fig. 7, in the information processing system 1, when preprocessing is performed, processing of Step S501 illustrated in a branch CJ51 is executed. When preprocessing is performed, the QGW 100 shares a sequence number of quantum entanglement used for verification with the CLT 30 (Step S501). For example, the QGW 100 may transmit information indicating the sequence number of quantum entanglement used for verification to the CLT 30 and thereby share the information with the CLT 30. For example, the QGW 100 and the CLT 30 periodically share a sequence number as to which quantum entanglement is to be used to perform verification. Note that frequency may be determined based on any criterion, such as a state verification protocol.

Then, in the information processing system 1, loop processing related to generation of quantum entanglement illustrated in a loop IR51 is executed. First, the QGW 100, the EQRR 10b, and the CLT 30 generate quantum entanglement (Step S502). For example, the QGW 100, the CLT 30, and the EQRR 10b on the route between the CLT 30 and the QGW 100 execute quantum entanglement generation and generate quantum entanglement.

In the information processing system 1, when the sequence number is equal to a sequence number for verification, processing of Steps S503 to S505 illustrated in a branch CJ52 is executed. The QGW 100, the EQRR 10b, and the CLT 30 perform quantum state verification (Step S503). For example, the information processing system 1 executes a state verification protocol by using several percent of the generated quantum entanglement. Then, the QGW 100 stores measurement results (Step S504). The CLT 30 stores measurement results (Step S505).

Note that quantum state verification is disclosed in the following literature as related literature, for example.
- Pappa, Anna, et al. "Multipartite entanglement verification resistant against dishonest parties." Physical review letters 108.26 (2012):260502.
- Li, Zihao, Yun-Guang Han, and Huangjun Zhu. "Efficient verification of bipartite pure states." Physical Review A 100.3 (2019):032316.
- Wang, Kun, and Masahito Hayashi. "Optimal verification of two-qubit pure states." Physical Review A 100.3 (2019):032315.

On the other hand, in the information processing system 1, in other cases, i.e., when the sequence number is not equal to the sequence number for verification, processing of Step S506 illustrated in the branch CJ52 is executed. The QGW 100, the EQRR 10b, and the CLT 30 execute a normal task (Step S506). The QGW 100, the EQRR 10b, and the CLT 30 may execute an application such as data quality control (DQC).

Then, the QGW 100 transmits verification results to the CLT 30 (Step S507). The CLT 30 transmits the verification results to the QGW 100 (Step S508).

In the information processing system 1, when an abnormality is detected, processing of Steps S509 and S510 illustrated in a branch CJ53 is executed. When an abnormality is detected, the QGW 100 and the CLT 30 shut off connection (Step S509). When an abnormality is detected, for example, the QGW 100 shuts off communication with the CLT 30. Then, the CLT 30 performs rerouting (Step S510). For example, when an abnormality regarding the S value related to the Bell state (for example, a value in Bell's inequality) or the like is detected, the CLT 30 and the QGW 100 shut off communication once, and the CLT 30 performs communication using another route again.

On the other hand, in the information processing system 1, when there is no abnormality, i.e., when an abnormality is not detected, processing of Step S511 illustrated in the branch CJ53 is executed. When there is no abnormality, the CLT 30 continues execution (Step S511). For example, in a normal case, the QGW 100 and the CLT 30 continue processing.

Next, processing related to computer verification of Fig. 8 will be described. In Fig. 8, in the information processing system 1, the CLT 30 randomly creates a verification job (Step S601). Note that, as the verification job used herein, any job such as matrix computation and a ground state of chemical substances can be employed as long as computational performance can be ensured. For example, it may be a job with a processing load (for example, an amount of computation of approximately 50 quantum bits or more) that is difficult to be processed in the classical function. For example, the CLT 30 may randomly change a part of the job to be transmitted to a verification job.

Note that the verification job is disclosed in the following literature as related literature, for example.
- Gheorghiu, Alexandru, and Thomas Vidick. "Computationally-secure and composable remote state preparation." 2019 IEEE 60th Annual Symposium on Foundations of Computer Science (FOCS). IEEE, 2019.
- Knorzer, Johannes, Daniel Malz, and J. Ignacio Cirac. "Cross-Platform Verification in Quantum Networks." arXiv preprint arXiv:2212.07789 (2022).

Then, the CLT 30 transmits the verification job to the QGW 100 of the quantum data center 2 (Step S602). The QGW 100 and the QPD 20 that have received the verification job execute the received verification job (Step S603).

In the information processing system 1, when the quantum state is used for verification, processing of Steps S604 to S606 illustrated in a branch CJ61 is executed. When the quantum state is used for verification, the QGW 100 generates quantum entanglement (Step S604). When the quantum state is used for verification, for example, the QGW 100 and the CLT 30 execute quantum entanglement generation and generate quantum entanglement. Then, the QGW 100 transmits a verification result state (Step S605). For example, the QGW 100 transmits the verification result state to the CLT 30. The CLT 30 verifies a final state (Step S606). For example, the QGW 100 and the CLT 30 also generate entanglement between end nodes, and measure the transmitted quantum state.

On the other hand, in the information processing system 1, when the results are transmitted in classical communication, i.e., when the quantum state is not used for verification, processing of Steps S607 and S608 illustrated in the branch CJ61 is executed. When the results are transmitted in classical communication, the QGW 100 transmits execution results (Step S607). For example, the QGW 100 transmits the execution results to the CLT 30. The CLT 30 verifies computation results (Step S608). For example, the CLT 30 compares them with assumed computation results, and when the computation results differ significantly, the CLT 30 shuts off communication.

Note that, in addition to the above, the second task is disclosed in the following literature, for example.
- Satoh, Takahiko, et al. "The network impact of hijacking a quantum repeater." Quantum Science and Technology 3.3 (2018):034008

As described above, when trust with a client is established in the second task, the gateway apparatus 100 can ensure high reliability, which is an advantage of the quantum network. Therefore, the gateway apparatus 100 can enable appropriate operation of the quantum network. For example, the gateway apparatus 100 generates quantum entanglement with a quantum node in the quantum internet at the time of starting communication of the quantum information, and measures quality of the quantum entanglement, and when the measured quality is normal, the gateway apparatus 100 continues the communication, and when the measured quality is not normal, the gateway apparatus 100 shuts off the communication.

### [3-3. Third Task (Participation in Quantum Internet)]

### [3-3-1. Overview of Third Task]

Next, an overview of the third task will be described. Note that description of details similar to the above-described details, such as the details described in other tasks, will be omitted as appropriate. The third task is a task related to participation in the quantum internet. One of the points in the third task is satisfying a policy and the like to be referenced and enabling cooperation with another quantum network, for example.

The third task may be premised on the following. For example, a new quantum data center attempts connection to the quantum internet. For example, it is assumed that connection of physical links is already established. For example, it is assumed that link costs with an external router are unknown. For example, it is assumed that the QGW possesses information related to a connectable host in the quantum data center.

### [3-3-2. Processing Example Related to Third Task]

In the following, with reference to Fig. 9, a processing example related to the third task will be described. Fig. 9 is a sequence diagram illustrating an example of processing related to the third task. The information processing system 1 executes the following processing for the third task.

Note that an EQRR 10b-1 shown as "EQRR" in Fig. 9 is an external quantum node (a relay node 10 such as a quantum router) that is adjacent to the QGW 100, and an EQRR 10b-2 shown as "Other EQRR" in Fig. 9 is a quantum node (relay node 10) that is not adjacent to the QGW 100. For example, the EQRR 10b-1 may be the leftmost EQRR 10b among the seven EQRRs 10b illustrated in Fig. 1, and the EQRR 10b-2 may be an EQRR 10b other than the above (for example, the rightmost EQRR 10b or the like).

In Fig. 9, a case in which the IQR 10c is arranged between the QGW 100 and the EQRR 10b-1 being its adjacent node will be described as an example. In this case, in Fig. 1, it is arranged between the leftmost EQRR 10b among the seven EQRRs 10b and the QGW 100, and is connected to the leftmost EQRR 10b and the QGW 100 via the quantum internet QN2. For example, the IQR 10c is a constituent element having a function of a repeater outside the quantum data center 2. For example, the IQR 10c communicates (transfers) the quantum states (quantum information) with other constituent elements by using the technology of quantum teleportation based on quantum entanglement swapping and classical communication.

Note that the number of IQRs 10c is not limited to one and may be any number. The IQR 10c of Fig. 1 may be the EQRR 10b. In a configuration in which the IQR 10c performing relaying as a repeater as described above is interposed for connection, the gateway apparatus 100 and the EQRR10b may still be treated as adjacent nodes, and the leftmost EQRR 10b among the seven EQRRs 10b is an adjacent node to the gateway apparatus 100.

In the following, with reference to Fig. 9, an example of participation in the quantum internet will be described. In Fig. 9, in the information processing system 1, the QGW 100 and the EQRR 10b-1 perform processing related to link-up (Step S701). The QGW 100 performs connection confirmation (OPEN) with the EQRR 10b-1 (Step S702). For example, the QGW 100 may perform processing similar to an OPEN message of the border gateway protocol (BGP) or the like. For example, the QGW 100 is connected to the EQRR 10b-1, and performs processing to enter a state capable of communicating with the EQRR 10b-1. Then, the EQRR 10b-1 shares connection completion and existing route information (UPDATE) with the QGW 100 (Step S703).

Note that, regarding the above processing, a protocol for performing routing control between autonomous systems (ASs) used in classical communication is disclosed in the following literature, for example.
- Rekhter, Yakov, Tony Li, and Susan Hares. A border gateway protocol 4 (BGP-4). No.rfc4271. 2006.

In the information processing system 1, when inter-AS link costs (quantum costs) are necessary, processing of Steps S704 to S718 illustrated in a branch CJ71 is executed. The QGW 100 creates a link cost computation job (Step S704). Then, the QGW 100 transmits a benchmark job (Step S705). For example, the QGW 100 transmits the benchmark job to the EQRR 10b-1.

The EQRR 10b-1 verifies the benchmark job (Step S706). Then, the EQRR 10b-1 returns a response (Step S707). For example, the EQRR 10b-1 transmits verification results (response) of the benchmark job to the QGW 100.

The QGW 100 performs a link quantum entanglement generation request to the IQR 10c (Step S708). For example, the QGW 100 transmits, to the IQR 10c arranged between the QGW 100 and the EQRR 10b-1, a request for requesting generation of quantum entanglement between the QGW 100 and the EQRR 10b-1.

The IQR 10c that has received the request starts quantum entanglement generation (Step S709). For example, the IQR 10c starts generating quantum entanglement between the QGW 100 and the EQRR 10b-1. Then, the IQR 10c generates a quantum entanglement pair with the QGW 100 (Step S710), and generates a quantum entanglement pair with the EQRR 10b-1 (Step S711). In this manner, in this manner, the QGW 100, the IQR 10c, and the EQRR 10b-1 generate quantum entanglement (Step S712).

Then, the QGW 100, the IQR 10c, and the EQRR 10b-1 start a benchmark job (Step S713). For example, when a generation rate and fidelity of quantum entanglement are used for routing, the information processing system 1 performs a benchmark. In this processing, a benchmark method similar to that of the first task can be used, and thus detailed description will be omitted.

Then, the QGW 100 executes computation of link costs (Step S714), and updates the routing table (Step S715). The EQRR 10b-1 executes computation of link costs (Step S716), and updates the routing table (Step S717). Note that the processing of Steps S714 and S715 and the processing of Steps S716 and S717 may be performed in parallel, or either processing may be performed first.

Then, the EQRR 10b-1 updates the routing table of the EQRR 10b-2 (Step S718). For example, the EQRR 10b-1 may request the EQRR 10b-2 to update the routing table by transmitting information on the routing table updated in Step S717 to the EQRR 10b-2, and cause the EQRR 10b-2 to update the routing table.

On the other hand, in the information processing system 1, when the inter-AS link costs (quantum costs) are not considered, i.e., when the inter-AS link costs are not necessary, processing of Steps S719 and S720 illustrated in the branch CJ71 is executed. The EQRR 10b-1 transmits a routing table update message to the QGW 100 (Step S719). For example, the EQRR 10b-1 requests the QGW 100 to update the routing table by transmitting the routing table update message to the QGW 100, and causes the QGW 100 to update the routing table. The EQRR 10b-1 transmits a routing table update message to the EQRR 10b-2 (Step S720). For example, the EQRR 10b-1 requests the EQRR 10b-2 to update the routing table by transmitting the routing table update message to the EQRR 10b-2, and causes the EQRR 10b-2 to update the routing table.

Note that a case in which the inter-AS link costs are not used is disclosed in the following literature as related literature, for example.
- Tanizawa, Yoshimichi, Ririka Takahashi, and Alexander R. Dixon. "A routing method designed for a quantum key distribution network." 2016 Eighth International Conference on Ubiquitous and Future Networks (ICUFN). IEEE, 2016.

In this manner, when the processing related to participation in the quantum internet is performed, in the information processing system 1, at the time point when physical connection is completed, the QGW 100 transmits a message for notifying an adjacent node of the presence. Then, the EQRR 10b-1, i.e., the adjacent node that has received the message, returns a response for confirming the reception. Then, the QGW 100 creates a plan of a benchmark job for computing link costs, and transmits the plan to the adjacent node. Then, the EQRR 10b-1, i.e., the adjacent node, receives the plan of the benchmark job, and returns a response. Then, the QGW 100 requests an intermediate repeater (IQR 10c) or the like to generate a link state according to the agreed plan, based on the transmitted job. Then, the QGW 100 and the EQRR 10b-1 perform the benchmark on the link state, and compute link costs. Then, the QGW 100 and the EQRR 10b1 update the routing table, based on the link costs.

As described above, when the processing related to participation in the quantum internet is performed in the third task, the gateway apparatus 100 can enable the quantum data center to appropriately communicate with the CLT 30 in the quantum internet. Therefore, the gateway apparatus 100 can enable appropriate operation of the quantum network. For example, the gateway apparatus 100 transmits a message to an adjacent quantum node, receives a response from the adjacent quantum node, requests the adjacent node to obtain information indicating communication quality between the adjacent quantum node and the gateway apparatus 100, and obtains the information indicating the communication quality between the gateway apparatus 100 and the adjacent quantum node.

### [3-4. Fourth Task (Routing outside Quantum Data Center)]

### [3-4-1. Overview of Fourth Task]

Next, an overview of the fourth task will be described. Note that description of details similar to the above-described details, such as the details described in other tasks, will be omitted as appropriate. The fourth task is a task related to quantum internet routing. One of the points in the fourth task is sharing information on the QGW with an adjacent node of the QGW on the quantum internet, for example.

The fourth task may be premised on the following. For example, a new quantum router or client is added to the quantum internet somewhere.

### [3-4-2. Processing Example Related to Fourth Task]

In the following, with reference to Fig. 10, a processing example related to the fourth task will be described. Fig. 10 is a sequence diagram illustrating an example of processing related to the fourth task. The information processing system 1 executes the following processing for the fourth task.

Note that the EQRR 10b-1 shown as "EQRR" and the EQRR 10b-2 shown as "EQRR #2" in Fig. 10 are external quantum nodes (relay nodes 10 such as quantum routers) that are adjacent to the QGW 100. In this manner, in Fig. 10, a case in which a plurality of adjacent nodes are present for the QGW 100 will be described as an example.

In the following, with reference to Fig. 10, an example of quantum internet routing will be described. In Fig. 10, in the information processing system 1, a new router (a quantum node or the like) participates in the network (Step S801). Then, the EQRR 10b-1 updates the routing table (Step S802). The EQRR 10b-1 transmits a routing table update message to the QGW 100 (Step S803). Then, the QGW 100 updates the routing table (Step S804). In this manner, the EQRR 10b-1 requests the QGW 100 to update the routing table by transmitting the routing table update message to the QGW 100, and causes the QGW 100 to update the routing table.

In the information processing system 1, when a plurality of adjacent nodes are present for the QGW 100, processing of Step S805 illustrated in a branch CJ81 is executed. The QGW 100 transfers an update message (Step S805). For example, the QGW 100 transfers the update message to the EQRR 10b-2 being an adjacent node other than the EQRR 10b-1. For example, the EQRR 10b-2 that has received the update message transferred from the QGW 100 updates the routing table, based on the received routing table update message.

In this manner, when routing outside the quantum data center is performed, in the information processing system 1, the QGW 100 receives a message that the route is updated from an adjacent node of the QGW 100. At the time point when physical connection is completed, a message for notifying the adjacent node of the presence is transmitted. Then, the QGW 100 updates its own routing table. Then, the QGW 100 transfers the updated routing information to another adjacent node.

As described above, when routing outside the quantum data center, i.e., routing of the quantum internet, is performed in the fourth task, the gateway apparatus 100 can enable appropriate routing to be performed between the gateway apparatus 100 and the CLT 30 or between the gateway apparatus 100 and another autonomous system (AS). Therefore, the gateway apparatus 100 can enable appropriate operation of the quantum network. For example, the gateway apparatus 100 receives a routing table update message transmitted due to update of a routing table of an adjacent quantum node, and updates the routing table, based on the routing table update message of the adjacent quantum node.

### [3-5. Fifth Task (Withdrawal from Quantum Internet)]

### [3-5-1. Overview of Fifth Task]

Next, an overview of the fifth task will be described. Note that description of details similar to the above-described details, such as the details described in other tasks, will be omitted as appropriate. The fifth task is a task related to withdrawal from the quantum internet. One of the points in the fifth task is separately defining protocols for normal termination and abnormal termination, for example.

The fifth task may be premised on the following. For example, the entire quantum data center withdraws from the quantum internet for some reason.

### [3-5-2. Processing Example Related to Fifth Task]

In the following, with reference to Fig. 11 to Fig. 13, a processing example related to the fifth task will be described. Fig. 11 to Fig. 13 are each a sequence diagram illustrating an example of processing related to the fifth task. The information processing system 1 executes the following processing for the fifth task.

### [3-5-2-1. Normal Withdrawal]

First, with reference to Fig. 11, an example of normal withdrawal will be described. Fig. 11 illustrates an example of specific processing when normal withdrawal is performed.

In Fig. 11, in the information processing system 1, the QGW 100 declares withdrawal (Step S901). For example, the QGW 100 transmits information indicating withdrawal from the quantum internet (for example, the quantum internet QN2 or the like) to the EQRR 10b.

The EQRR 10b that has received the declaration of withdrawal from the QGW 100 deletes the route to the QGW 100 from the routing table (Step S902). The QGW 100 stops an intermediate repeater (Step S903). For example, the QGW 100 requests the IQR 10c to stop relaying, and stops relaying of the IQR 10c.

### [3-5-2-2. Classical Device Failure]

Next, with reference to Fig. 12, an example of a classical device failure will be described. Fig. 12 illustrates an example of specific processing when a classical device failure occurs. For example, Fig. 12 illustrates an example of specific processing when a failure occurs in the classical function of the QGW 100. Note that, as described above, the network manager may be a computer functioning as a network manager, or may be a human administrator. When the network manager is a human administrator, the NMG 50 illustrated in Fig. 12 may be a computer (for example, a mobile terminal or the like) used by the human administrator.

In Fig. 12, in the information processing system 1, the EQRR 10b loses classical communication with the QGW 100 (Step S1001). For example, when the EQRR 10b enters a state incapable of classical communication via the classical internet CN2, the EQRR 10b loses classical communication with the QGW 100.

The EQRR 10b that has lost classical communication with the QGW 100 deletes the route to the QGW 100 from the routing table (Step S1002). The QGW 100 notifies the NMG 50 of a communication error (Step S1003). For example, the QGW 100 notifies the NMG 50 of the communication error by transmitting, to the NMG 50, information indicating that classical communication can no longer be performed with the EQRR 10b.

The NMG 50 that has received the notification of the communication error corrects the error (Step S1004). For example, when the network manager is a human administrator, the human administrator or the like using the NMG 50 corrects the error, based on details of the notification of the communication error.

The QGW 100 requests the EQRR 10b to participate again (Step S1005). After correction of the communication error completes, the QGW 100 requests the EQRR 10b to participate again. For example, the QGW 100 requests the EQRR 10b to participate, in a manner similar to the processing in the third task.

### [3-5-2-3. Quantum Device Failure]

Next, with reference to Fig. 13, an example of a quantum device failure will be described. Fig. 13 illustrates an example of specific processing when a quantum device failure occurs.

In Fig. 13, in the information processing system 1, the QGW 100 and the EQRR 10b have a quantum state generation abnormality (Step S1101). Then, the EQRR 10b detects the state generation abnormality (Step S1102).

The EQRR 10b that has detected the quantum state generation abnormality with the QGW 100 deletes the route to the QGW 100 (Step S1103). In this manner, the EQRR 10b updates the routing table (Step S1104). The EQRR 10b notifies the QGW 100 of the quantum state generation abnormality (Step S1105).

The QGW 100 that has received the notification of the quantum state generation abnormality notifies the NMG 50 of an error (Step S1106). For example, the QGW 100 notifies the NMG 50 of the error related to quantum state generation by transmitting, to the NMG 50, information indicating that there is an abnormality in quantum state generation with the EQRR 10b.

The NMG 50 that has received the notification of the error corrects the error with the QGW 100 (Step S1107). The NMG 50 corrects the error with the IQR 10c (Step S1108). For example, when the network manager is a human administrator, the human administrator or the like using the NMG 50 corrects the error with the QGW 100 and the IQR 10c arranged between the QGW 100 and the EQRR 10b, based on details of the notification of the error.

The QGW 100 requests the EQRR 10b to participate again (Step S1109). After correction of the error completes, the QGW 100 requests the EQRR 10b to participate again. For example, the QGW 100 requests the EQRR 10b to participate, in a manner similar to the processing in the third task.

In this manner, when withdrawal from the quantum internet is performed, in the information processing system 1, various processing is executed depending on the situation. For example, in the information processing system 1, in withdrawal from the quantum internet through a normal process due to maintenance or the like, the QGW 100 transmits a message for declaring withdrawal to an adjacent node. The adjacent node deletes the route to QDC #1 (the QGW 100 or the like), and updates the routing table. The QGW 100 stops the repeater (the IQR 10c or the like) that generates entanglement with the adjacent node.

For example, in the information processing system 1, in sudden withdrawal from the quantum internet due to abnormal termination caused by a classical device failure or the like, the adjacent node that has become incapable of communication due to loss of communication, where classical communication between the adjacent node and the QGW 100 is lost, excludes QDC #1 (the QGW 100 or the like) from the routing table. The QGW 100 outputs an error at the time point of confirming that there is an abnormality in communication, and performs a request for participation again at the time when the network manager performs correction.

For example, in the information processing system 1, when it is detected that entanglement is not generated between the QGW 100 and the adjacent node due to a quantum device failure, the adjacent node deletes the route to the QGW 100 from the routing table, and transmits a message for notifying the QGW 100 of the quantum state generation abnormality. The QGW 100 that has received the message outputs an error message. At the time when the network manager confirms and corrects the error, the QGW 100 transmits a message indicating performing of a benchmark to a target adjacent node. The benchmark is performed again between the adjacent node that has received the transmitted benchmark plan and the QGW 100, and at the time when it is confirmed that the quantum state is normally generated, it is incorporated into the routing table again. When there is an abnormality, the QGW 100 outputs an error message again.

Note that the fifth task is disclosed in the following literature as related literature, for example.
- Gyongyosi, Laszlo, and Sandor Imre. "Adaptive routing for quantum memory failures in the quantum internet." Quantum Information Processing 18 (2019):1-21.

As described above, when withdrawal from the quantum internet is performed in the fifth task, the gateway apparatus 100 can create an appropriate routing table necessary in the fourth task even in a case of occurrence of a failure or the like, and can enable another router (the relay node 10 or the like) participating in the quantum internet to appropriately update information. As a result, the CLT 30 can appropriately recognize operation information of the quantum data center, and can take an appropriate action even when the quantum data center withdraws from the network. Therefore, the gateway apparatus 100 can enable appropriate operation of the quantum network. For example, the gateway apparatus 100 receives a notification of a quantum state generation abnormality from an adjacent quantum node, and notifies a network manager of an error for error correction for a quantum repeater located between the adjacent quantum node and the gateway apparatus 100.

### [3-6. Sixth Task (Monitoring of Internal Information)]

### [3-6-1. Overview of Sixth Task]

Next, an overview of the sixth task will be described. Note that description of details similar to the above-described details, such as the details described in other tasks, will be omitted as appropriate. The sixth task is a task related to monitoring of internal information. One of the points in the sixth task is separately defining cases with and without dynamic monitoring of the internal information, for example.

The sixth task may be premised on the following. For example, the internal information refers to information such as the QPDs within a network boundary (within the intranet), link states and settings, or running tasks. For example, the QGW plays a role as a process on the network controller and the gateway router.

### [3-6-2. Processing Example Related to Sixth Task]

In the following, with reference to Fig. 14 and Fig. 15, a processing example related to the sixth task will be described. Fig. 14 and Fig. 15 are each a sequence diagram illustrating an example of processing related to the sixth task. The information processing system 1 executes the following processing for the sixth task.

### [3-6-2-1. Device Health Check]

First, with reference to Fig. 14, an example of a device health check will be described. Fig. 14 illustrates an example of specific processing when a device health check is performed.

In Fig. 14, in the information processing system 1, the QGW 100 transmits a health check message to the QPD 20 (Step S1201). For example, the QGW 100 requests information on device health from the QPD 20 by transmitting the health check message for requesting information on device health from the QPD 20.

The QPD 20 that has received the health check message transmits a response to the QGW 100 (Step S1202). For example, the QPD 20 that has received the health check message for requesting the information on device health transmits a response related to the device health to the QGW 100. For example, the response related to the device health includes information such as a QPU usage rate and device health as monitoring items. For example, the QPU usage rate is a rate computed by dividing the number of quantum bits used in a quantum process by the number of quantum bits available. The device health is information indicating whether all the processes operate normally. The monitoring items are not limited to the QPU usage rate and the device health, and may include any item related to the device health.

In the information processing system 1, when there is no response, processing of Step S1203 illustrated in a branch CJ121 is executed. When there is no response, the QGW 100 notifies the NMG 50 of an error (Step S1203). For example, the QGW 100 transmits, to the NMG 50, information indicating that there is no response from the QPD 20 to which the health check message has been transmitted.

### [3-6-2-2. Link Health Check]

Next, with reference to Fig. 15, an example of a link health check will be described. Fig. 15 illustrates an example of specific processing when a link health check is performed.

In Fig. 15, in the information processing system 1, the QGW 100 transmits a health check message to the QPD 20 (Step S1301). For example, the QGW 100 requests the information on link health from the QPD 20 by transmitting the health check message for requesting information on link health from the QPD 20.

The QPD 20 that has received the health check message transmits a response to the QGW 100 (Step S1302). For example, the QPD 20 that has received the health check message for requesting the information on link health transmits a response related to the link health to the QGW 100. For example, the response related to the link health includes information such as a link generation rate and average fidelity as monitoring items. For example, the link generation rate is information indicating the number of physical Bell pairs per second. The average fidelity is an average (value) of fidelity of generated physical Bell pairs. The monitoring items are not limited to the link generation rate and the average fidelity, and may include any item related to the link health.

In the information processing system 1, when there is no response or when a state generation abnormality is detected, processing of Step S1303 illustrated in a branch CJ131 is executed. When there is no response or when a state generation abnormality is detected, the QGW 100 notifies the NMG 50 of an error (Step S1303). For example, the QGW 100 transmits, to the NMG 50, information indicating that there is no response from the QPD 20 to which the health check message has been transmitted.

In this manner, when monitoring of the internal information is performed, in the information processing system 1, various processing is executed depending on information and a situation to be monitored. For example, in the information processing system 1, the monitored information may be used. For example, for example, in the information processing system 1, when no internal information is monitored, information obtained through internal routing (only information on topology and link costs) may be used. For example, in the information processing system 1, when devices in the network are monitored, a health check (reactivation at the time of abnormal termination) on states of each QPU or process in the QPU and the devices may be performed. For example, in the information processing system 1, processing related to a generation rate of each link, generated state fidelity of each link, device failure detection, rerouting, and the like may be performed. For example, in the information processing system 1, processing related to QoS, routing optimization, and the like may be performed, based on the usage rate of each QPU.

For example, in the information processing system 1, the following processing may be performed for the health check of each device. For example, for example, in the information processing system 1, a message is periodically transmitted from the QGW 100 to the QPUs (the QPDs 20 or the like), and the QPUs (the QPDs 20 or the like) that have responded are determined to be normal.

For example, in the information processing system 1, processes of each device may be monitored, and a process for monitoring processes related to quantum operation, applications, and the like may be caused to reside in each QPU. In this case, for example, in the information processing system 1, when the process is abnormally terminated, error information and information on a corresponding client are transmitted to the QGW 100. The QGW 100 transmits details of the error to the client.

For example, in the information processing system 1, processing related to the generation rate of each link may be performed. For example, in the information processing system 1, the QPUs (the QPD 20s or the like) constantly monitor the state generation rate computed from a swapping record or the like, and transmit the latest generation rate to the QGW 100 at the time of the health check of the QGW 100. The QGW 100 performs comparison with a value difference between right and left repeaters of each link and previous records, and when there is an abnormality, the route is computed again, and the network manager is notified thereof.

For example, in the information processing system 1, processing related to fidelity of each link state may be performed. For example, in the information processing system 1, several percent of generated link states are used for performance measurement of tomography or the like, and the fidelity of the links is constantly updated. For example, in the information processing system 1, the latest link fidelity is fed back to the QGW 100 at the time of the health check or on a periodic basis, and the QGW 100 updates link cost information.

For example, in the information processing system 1, processing related to the QPU usage rate may be performed. For example, in the information processing system 1, each QPU causes a process for monitoring the number of quantum bits in use to reside, and measures the usage rate. For example, in the information processing system 1, the latest QPU usage rate may be fed back to the QGW 100 at the time of the health check or on a periodic basis, and tasks may be assigned from the QPUs having a low usage rate, based on the information.

As described above, when monitoring of the internal information is performed in the sixth task, the gateway apparatus 100 can enable execution of effective routing, network resource optimization, and function failure detection. Therefore, the gateway apparatus 100 can enable appropriate operation of the quantum network.

### [3-7. Seventh Task (Communication Quality Assurance or Resource Reservation)]

### [3-7-1. Overview of Seventh Task]

Next, an overview of the seventh task will be described. Note that description of details similar to the above-described details, such as the details described in other tasks, will be omitted as appropriate. The seventh task is a task related to communication quality assurance (QoS) or resource reservation. One of the points in the seventh task is appropriately assigning resources for each service and CLT and also ensuring overall service quality, for example.

The seventh task may be premised on the following. For example, the resources refer to computational resources such as the generation rate of each quantum link and available quantum bits in the QPD. For example, the QGW has authority to reserve resources in the network, but does not perform negotiation or the like for securing resources for an extranet. For example, QoS in quantum may be related to quality of a quantum application, such as quantity and quality of quantum entanglement assigned to a certain application and low-latency feedback operation. For example, a necessary generation rate and a threshold of fidelity change depending on a type of quantum application. For example, the QGW is responsible for QoS requirements for an application.

### [3-7-2. Processing Example Related to Seventh Task]

In the following, with reference to Fig. 16, a processing example related to the seventh task will be described. Fig. 16 is a sequence diagram illustrating an example of processing related to the seventh task. The information processing system 1 executes the following processing for the seventh task.

First, an example of specific processing illustrated in Fig. 16 will be described. In Fig. 16, in the information processing system 1, the CLT 30 transmits a request including QoS requirements to the QGW 100 (Step S1401). For example, the CLT 30 requests communication quality indicated by the QoS requirements from the QGW 100 by transmitting the request including the QoS requirements to the QGW 100. The QGW 100 that has received the request including the QoS requirements from the CLT 30 examines the QoS requirements (Step S1402). For example, by examining the QoS requirements, the QGW 100 identifies quality requested by the CLT 30.

In the information processing system 1, when the QoS requirements cannot be satisfied, processing of Step S1403 illustrated in a branch CJ141 is executed. For example, when the QoS requirements cannot be satisfied, the QGW 100 notifies the CLT 30 of an error (Step S1403). For example, when the QoS requirements cannot be satisfied, i.e., when it is determined that quality indicated by the QoS requirements cannot be assured, the QGW 100 notifies the CLT 30 of the error by transmitting information indicating that the QoS requirements cannot be satisfied.

On the other hand, in the information processing system 1, when the QoS requirements can be satisfied, processing of Steps S1404 to S1408 is executed. First, the QGW 100 performs route establishment (Step S1404). For example, when the QoS requirements can be satisfied, i.e., when it is determined that quality indicated by the QoS requirements can be assured, the QGW 100 determines the QPD 20 to be used for a service to the CLT 30, and determines routing with the QPD 20.

Then, the QGW 100 performs quantum communication scheduling between the QGW 100 and the CLT 30 (Step S1405). For example, the QGW 100 generates quantum communication scheduling that satisfies the QoS requirements with the CLT 30. The QGW 100 shares the schedule with the CLT 30 (Step S1406). For example, the QGW 100 shares the schedule related to quantum communication with the CLT 30 by transmitting information indicating the generated quantum communication scheduling to the CLT 30.

The QGW 100 reserves quantum bandwidth for the QRR 10a-1 (Step S1407). The QGW 100 reserves use of the quantum processor and transmits a task to the QPD 20 (Step S1408).

The QPD 20 and the QRR 10a-1 execute the task (Step S1409). For example, the QPD 20 and the QRR 10a-1 execute the designated job (task), based on the information received from the QGW 100.

In this manner, when communication quality assurance or resource reservation is performed, in the information processing system 1, at the time point when the QGW 100 receives a request of an application, computation of necessary resources and internal routing are performed. For example, in the information processing system 1, when necessary resources are reserved depending on a type of application, a request for securing necessary quantum bandwidth is performed to a device on the route from a preset relationship table between application types and necessary resources.

For example, in the information processing system 1, when there is a preset QoS condition (QoS requirements or the like) in the request, or when there is a preset QoS condition in the request from a client, whether the QGW 100 can assure the QoS is verified. For example, in the information processing system 1, when the QoS cannot be assured, a response indicating that the QGW 100 cannot assure the QoS is returned to the client.

For example, in the information processing system 1, in a case of an application in which synchronization with the client is important, the QGW 100 reserves a resource generation rate equivalent to the generation rate that is computed from the route to the client on the path up to an end node QPU (the QPD 20 or the like).

For example, in the information processing system 1, quality is assured when an application is preferentially executed or a service is preferentially caused to be used. For example, in the information processing system 1, QoS routing is performed in a case of an application that imposes extremely high fidelity requirements.

For example, in the information processing system 1, the generation rate in the quantum internet may be estimated, and internal resources having such a margin as to allow purification and error correction to be performed may be reserved. For example, in the information processing system 1, the generation rate in the quantum internet may be estimated, and internal resources may be reserved to approach the generation rate. In this case, for example, in the information processing system 1, resources remaining depending on the necessity of performing purification or the like between end nodes are assigned to another connection, processing, and the like.

In the information processing system 1, in setting the QoS requirements, weighting may be performed on how many Bell pairs are assigned to which application from the following perspectives. For example, in the information processing system 1, one or more may be selected from these and set flexibly.

For example, one example of the above perspectives is related to a quantum application type, such as Quantum Key Distribution, Distributed Quantum Computing, Blind Quantum Computing, Quantum Sensor Network, and Quantum metrology.

For example, one example of the above perspectives is related to minimum fidelity, such as high (for example, requirement of high quantum error correlation (QEC) or the like), intermediate (for example, requirement or the like of purification or the like), and low (for example, physical Bell pairs or the like).

For example, one example of the above perspectives is related to the number of required Bell pairs/generation rate per second or the like. For example, one example of the above perspectives is related to a service level, such as superiority or inferiority, according to a billing plan. Note that the perspectives are not limited to the above examples, and any perspective can be employed. For example, a constituent element such as the NMG 50 may install a policy of performing weighting in advance.

Note that the seventh task is disclosed in the following literature as related literature, for example.
- Cicconetti, Claudio, Marco Conti, and Andrea Passarella. "Quality of Service in Quantum Networks." IEEE Network 36.5 (2022):24-31.
- Vardoyan, Gayane, and Stephanie Wehner. "Quantum Network Utility Maximization." arXiv preprint arXiv:2210.08135 (2022).

As described above, when communication quality assurance (QoS) or resource reservation is performed in the seventh task, the gateway apparatus 100 can enable enhancement and maximization of service quality. Therefore, the gateway apparatus 100 can enable appropriate operation of the quantum network.

### [3-8. Eighth Task (Internal Failure Handling)]

### [3-8-1. Overview of Eighth Task]

Next, an overview of the eighth task will be described. Note that description of details similar to the above-described details, such as the details described in other tasks, will be omitted as appropriate. The eighth task is a task related to internal failure handling such as failure detection and handling. One of the points in the eighth task is, when a device has a failure, appropriately causing devices around the device to detect the failure, for example.

The eighth task may be premised on the following. For example, the target is a device failure in the intranet. For example, failure recovery is performed by the network manager that manages the network, and includes network redundancy as well.

### [3-8-2. Processing Example Related to Eighth Task]

In the following, with reference to Fig. 17 to Fig. 19, a processing example related to the eighth task will be described. Fig. 17 to Fig. 19 are each a sequence diagram illustrating an example of processing related to the eighth task. The information processing system 1 executes the following processing for the eighth task.

### [3-8-2-1. Abnormal Stop of QPD]

First, with reference to Fig. 17, an example of an abnormal stop of the QPD will be described. Fig. 17 illustrates an example of specific processing when an abnormal stop of the QPD occurs.

In Fig. 17, in the information processing system 1, the QPD 20 and the QRR 10a are adjacent to each other (Step S1501). For example, the QRR 10a in Fig. 17 is an adjacent node of the QPD 20 in Fig. 17. Note that Step S1501 indicates that the QRR 10a in Fig. 17 is an adjacent node of the QPD 20 in Fig. 17 before processing of Step S1502 and subsequent steps, and does not indicate any processing.

The QPD 20 abnormally stops (Step S1502). For example, the QPD 20 in Fig. 17 to which the QRR 10a in Fig. 17 is adjacent abnormally stops.

Then, the QGW 100 requests the QPD 20 to perform a health check (Step S1503). For example, the QGW 100 requests the QPD 20 to perform the health check by transmitting a health check message for requesting the QPD 20 to perform the health check.

Fig. 17 illustrates a case in which a response from the QPD 20 to the QGW 100 is not returned, because the QPD 20 has abnormally stopped at a time point before Step S1503. The QGW 100 detects a timeout (Step S1504). For example, the QGW 100 detects a timeout when a period until receiving a response to the health check has elapsed. The QGW 100 updates the routing table (Step S1505). For example, the QGW 100 determines that an abnormality has occurred in the QPD 20, and updates the routing table for the QPD 20.

The QGW 100 deletes the route to the QRR 10a being adjacent to the QPD 20 (Step S1506). For example, the QGW 100 deletes the route to the QRR 10a being adjacent to the QPD 20 in which it is determined that an abnormality has occurred, and thereby excludes the route to the QPD 20 from routing candidates.

The QGW 100 notifies the NMG 50 of an error (Step S1507). For example, the QGW 100 notifies the NMG 50 of the error related to the QPD 20 by transmitting, to the NMG 50, information indicating that the QPD 20 may have abnormally stopped.

The NMG 50 that has received the notification of the error recovers the QPD 20 (Step S1508). For example, the human administrator or the like using the NMG 50 that has received the notification of the error recovers the QPD 20 by correcting the error of the QPD 20. For example, the administrator (operator) or the like performs troubleshooting including any operation according to details of the error, such as device replacement and software modification, and recovers the QPD 20. In Fig. 17, in Step S1508, the QPD 20 is recovered.

Then, the recovered QPD 20 requests topology update (Step S1509). For example, the recovered QPD 20 requests the QGW 100 to update to the topology in which the route deleted in Step S1506 is restored. For example, the QPD 20 requests the topology update to the QGW 100, in a manner similar to the processing in the second task.

The QGW 100 adds a route (Step S1510). For example, the QGW 100 that has received the request from the recovered QPD 20 adds a route to the QRR 10a being adjacent to the recovered QPD 20. For example, the QGW 100 adds a route to the QPD 20 to the routing candidates by adding the route to the QRR 10a being adjacent to the recovered QPD 20, i.e., restoring the route deleted in Step S1506.

### [3-8-2-2. Abnormal Stop of QRR]

Next, with reference to Fig. 18, an example of an abnormal stop of the QRR will be described. Fig. 18 illustrates an example of specific processing when an abnormal stop of the QRR occurs.

Note that the QRR 10a-2 shown as "QRR #2" and a QRR 10a-3 shown as "QRR #3" in Fig. 18 are adjacent nodes of the QRR 10a-1 shown as "QRR #1" in Fig. 18. In this manner, in Fig. 18, a case in which a plurality of adjacent nodes, i.e., the QRR 10a-2 and the QRR 10a-3, are present for the QRR 10a-1 will be described as an example.

As described above, in Fig. 18, in the information processing system 1, the QRR 10a-2 and the QRR 10a-1 are adjacent to each other, and a route between the QRR 10a-2 and the QRR 10a-1 is set as a priority route (Step S1601). The QRR 10a-3 and the QRR 10a-1 are adjacent to each other (Step S1602). For example, in Fig. 18, the route between the QRR 10a-2 and the QRR 10a-1 is set to be used with priority over a route between the QRR 10a-3 and the QRR 10a-1. Note that Steps S1601 and S1602 indicate that the QRR 10a-2 and the QRR 10a-3 are adjacent nodes of the QRR 10a-1 before processing of Step S1603 and subsequent steps, and do not indicate any processing.

The QRR 10a-2 abnormally stops (Step S1603). For example, the QRR 10a-2 in Fig. 18 to which the QRR 10a-1 in Fig. 18 is adjacent abnormally stops.

Then, the QGW 100 requests the QRR 10a-2 to perform a health check (Step S1604). For example, the QGW 100 requests the QRR 10a-2 to perform the health check by transmitting a health check message for requesting the QRR 10a-2 to perform the health check.

Fig. 18 illustrates a case in which a response from the QRR 10a-2 to the QGW 100 is not returned, because the QRR 10a-2 has abnormally stopped at a time point before Step S1604. The QGW 100 detects a timeout (Step S1605). For example, the QGW 100 detects a timeout when a period until receiving a response to the health check has elapsed. The QGW 100 updates the routing table (Step S1606). For example, the QGW 100 determines that an abnormality has occurred in the QRR 10a-2, and updates the routing table for the QRR 10a-2.

The QGW 100 deletes the route to the QRR 10a-1 being adjacent to the QRR 10a-2 (Step S1607). For example, the QGW 100 instructs the QRR 10a-1 to delete the route to the QRR 10a-1 being adjacent to the QRR 10a-2 in which it is determined that an abnormality has occurred, and thereby excludes the route to the QRR 10a-2 from routing candidates.

The QGW 100 performs priority route setting for the QRR 10a-3 in which no abnormality has occurred among the adjacent nodes of the QRR 10a-1 (Step S1608). For example, the QGW 100 sets the route between the QRR 10a-3 and the QRR 10a-1 in which no abnormality has occurred among the adjacent nodes of the QRR 10a-1 to the priority route.

The QGW 100 notifies the NMG 50 of an error (Step S1609). For example, the QGW 100 notifies the NMG 50 of the error related to the QRR 10a-2 by transmitting, to the NMG 50, information indicating that the QRR 10a-2 may have abnormally stopped.

The NMG 50 that has received the notification of the error recovers the QRR 10a-2 (Step S1610). For example, the human administrator or the like using the NMG 50 that has received the notification of the error recovers the QRR 10a-2 by correcting the error of the QRR 10a-2. In Fig. 18, in Step S1610, the QRR 10a-2 is recovered.

Then, the recovered QRR 10a-2 requests topology update (Step S1611). For example, the recovered QRR 10a-2 requests the QGW 100 to update to the topology in which the route deleted in Step S1607 is restored. For example, the QRR 10a-2 requests the topology update to the QGW 100, in a manner similar to the processing in the first task.

For example, the QGW 100 that has received the request from the recovered QRR 10a-2 adds a route to the QRR 10a-1 being adjacent to the recovered QRR 10a-2. For example, the QGW 100 adds a route to the QRR 10a-2 to the routing candidates by adding the route to the QRR 10a-1 being adjacent to the recovered QRR 10a-2, i.e., restoring the route deleted in Step S1607.

### [3-8-2-3. Link Cost Abnormality]

Next, with reference to Fig. 19, an example of a link cost abnormality will be described. Fig. 19 illustrates an example of specific processing when a link cost abnormality occurs.

Note that the QRR 10a-2 shown as "QRR #2" in Fig. 19 is an adjacent node of the QRR 10a-1 shown as "QRR #1" in Fig. 19. In this manner, in Fig. 19, a case in which the QRR 10a-1 and the QRR 10a-2 are adjacent nodes (of each other) will be described as an example.

As described above, in Fig. 19, in the information processing system 1, reduction in a physical Bell pair generation rate occurs in the QRR 10a-1 and the QRR 10a-2 (Step S1701). For example, the reduction occurs in the physical Bell pair generation rate in quantum entanglement between the QRR 10a-1 and the QRR 10a-2.

Then, the QGW 100 requests the QRR 10a-2 to perform a health check (Step S1702). For example, the QGW 100 requests the QRR 10a-2 to perform the health check by transmitting a health check message for requesting the QRR 10a-2 to perform the health check.

In Fig. 19, reduction occurs in the physical Bell pair generation rate between the QRR 10a-1 and the QRR 10a-2 even at the time point of Step S1702, and thus a response of a low physical Bell pair generation rate is performed from the QRR 10a-2 (Step S1703). In this manner, the QGW 100 receives the response indicating the low physical Bell pair generation rate from the QRR 10a-2.

The QGW 100 determines whether or not an abnormality related to quantum state generation occurs by comparing the generation rate and a threshold (Step S1704). For example, the QGW 100 compares the physical Bell pair generation rate indicated by the response received from the QRR 10a-2 and the threshold related to an abnormality in quantum state generation, and determines that an abnormality related to quantum state generation occurs because the physical Bell pair generation rate is lower than the threshold. Thus, the QGW 100 updates the routing table (Step S1705). For example, the QGW 100 determines that an abnormality occurs in quantum state generation between the QRR 10a-2 and the QRR 10a-1, and updates the routing table for the QRR 10a-2.

The QGW 100 deletes the route to the QRR 10a-1 being adjacent to the QRR 10a-2 (Step S1706). For example, the QGW 100 instructs the QRR 10a-2 to delete the route between the QRR 10a-2 and the QRR 10a-1 in which it is determined that an abnormality has occurred in quantum state generation, and thereby excludes the route to the QRR 10a-1 from routing candidates.

The QGW 100 notifies the NMG 50 of a generation abnormality (Step S1707). For example, the QGW 100 performs notification of the quantum state generation abnormality between the QRR 10a-2 and the QRR 10a-1 by transmitting, to the NMG 50, information indicating that an abnormality may have occurred in quantum state generation between the QRR 10a-2 and the QRR 10a-1.

The NMG 50 that has received the notification of the generation abnormality executes hardware calibration of the QRR 10a-1 and the QRR 10a-2 (Steps S1708 and S1709). For example, the human administrator or the like using the NMG 50 that has received the notification of the generation abnormality resolves the quantum state generation abnormality between the QRR 10a-2 and the QRR 10a-1 by performing hardware calibration on the QRR 10a-1 and the QRR 10a-2. In Fig. 19, in Steps S1708 and S1709, the quantum state generation abnormality between the QRR 10a-2 and the QRR 10a-1 is resolved.

Then, the QRR 10a-2 and the QRR 10a-1 with the quantum state generation abnormality being resolved execute a link benchmark job (Step S1710). Then, the QRR 10a-2 with the quantum state generation abnormality with the QRR 10a-1 being resolved requests topology update (Step S1711). For example, the recovered QRR 10a-2 requests the QGW 100 to update to the topology in which the route deleted in Step S1706 is restored. For example, the QRR 10a-2 requests the topology update to the QGW 100, in a manner similar to the processing in the first task.

For example, the QGW 100 that has received the request from the recovered QRR 10a-2 adds a route between the QRR 10a-2 and the QRR 10a-1 with the quantum state generation abnormality being resolved. For example, the QGW 100 adds a route to the QRR 10a-1 to the routing candidates by adding the route between the QRR 10a-2 and the QRR 10a-1 with the quantum state generation abnormality being resolved, i.e., restoring the route deleted in Step S1706.

In this manner, when internal failure handling is performed, in the information processing system 1, various processing is executed depending on details of the detected failure. For example, in the information processing system 1, when a repeater, a link, or a computational QPU in the network abnormally stops due to a failure or the like, the QGW 100 excludes a route passing through the target repeater or QPU from available routes, and notifies the network manager of the device failure. Then, the network manager performs recovery, and at the time point when it completes, the device notifies the QGW 100 or adjacent node(s) of the availability again. The QGW 100 makes the recovered route available again.

For example, in the information processing system 1, when the generation rate of a link or fidelity of a generated state indicates an abnormal value, a route including a repeater including the target link is excluded from the routing table, and performance measurement is requested. For example, in the information processing system 1, when a value of link performance improves, the path passing through the target repeater is added to the routing table again.

For example, in the information processing system 1, when the value of the link performance does not improve, initialization processing of the physical system is performed for the target repeater or the like, and performance measurement is performed again. For example, in the information processing system 1, when the link performance does not improve, it is notified to the network manager as a device failure. For example, in the information processing system 1, when it improves, processing or the like of adding the path passing through the target repeater or the like to the routing table again is performed, and handling of restoring to the state before the failure detection or the like is performed.

For example, in the information processing system 1, when a quantum gateway router is abnormally terminated due to a failure, and a backup quantum gateway router (backup router) is set, the QGW 100 switches to the backup router at the time of detecting the failure in one device. The QGW 100 notifies the network manager of detection of the failure in the gateway, and the network manager performs recovery operation.

For example, in the information processing system 1, when the backup router is not set, the QGW 100 notifies the network manager of the device failure, and the network manager performs recovery operation.

Note that the eighth task is disclosed in the following literature as related literature, for example.
- Pirker, Alexander, and Wolfgang Dur. "A quantum network stack and protocols for reliable entanglement-based networks." New Journal of Physics 21.3 (2019):033003.

As described above, when failure detection and handling are performed in the eighth task, the gateway apparatus 100 can enable rapid recovery, partial maintenance of services, ensuring of service reliability, and the like by appropriately handling the failure. Therefore, the gateway apparatus 100 can enable appropriate operation of the quantum network. For example, the gateway apparatus 100 requests information including a physical Bell pair generation rate from at least one of two or more quantum nodes generating physical Bell pairs in the quantum intranet, receives the physical Bell pair generation rate from a quantum node in the quantum intranet, when the physical Bell pair generation rate is not a normal value, the gateway apparatus 100 updates a routing table, and notifies a network manager of a physical Bell pair generation abnormality for error correction for the at least one of the two or more quantum nodes generating the physical Bell pairs.

### [3-9. Ninth Task (Logging)]

### [3-9-1. Overview of Ninth Task]

Next, an overview of the ninth task will be described. Note that description of details similar to the above-described details, such as the details described in other tasks, will be omitted as appropriate. The ninth task is a task related to logging. One of the points in the ninth task is selecting items to be kept in logs according to an assumed purpose, for example.

The ninth task may be premised on the following. For example, types and the number of logs to be acquired and displayed may be determined by the size of the network, settings of the network manager, or the like.

### [3-9-2. Processing Example Related to Ninth Task]

In the following, a processing example related to the ninth task will be described. The information processing system 1 executes the following processing for the ninth task. When logging is performed, in the information processing system 1, the QGW 100 collects information related to each constituent element.

For example, in the information processing system 1, when a log related to the state of the repeater or the QPU in the network is output, details of a request and a response at the time of the health check periodically performed by the QGW 100 are displayed and recorded in a console as the log as needed together with a timestamp or the like. For example, when a log related to the state of the QPD 20, the QRR 10a, or the like is output, the QGW 100 displays and records details of a request and a response at the time of the health check periodically performed on the QPD 20 or the QRR 10a in a console as the log as needed together with a timestamp or the like.

When a response at the time of the health check times out or a device failure or a state generation abnormality is detected, the QGW 100 outputs this to the log, and in some cases notifies the network manager as an alert. For example, when a response at the time of the health check on the QPD 20, the QRR 10a, or the like times out or a device failure or a state generation abnormality is detected, the QGW 100 outputs this to the log, and in some cases notifies the NMG 50 as an alert.

As described above, when logging is performed in the ninth task, the gateway apparatus 100 can enable storing of information and enhancement of future service quality and reliability. Therefore, the gateway apparatus 100 can enable appropriate operation of the quantum network.

### [4. Additional Notes]

The processing according to each of the above-described embodiments may be executed in various different modes (modifications) other than the above-described embodiments and modifications.

In addition, among the processing operations described in the above-described embodiments, all or some of the processing operations described as being automatically performed may be manually performed, or all or some of the processing operations described as being manually performed may be automatically performed by a known method. In addition, processing procedures, specific terms, information including various data and parameters described in the above document and in the drawings can be freely changed, unless otherwise specifically noted. For example, various types of information illustrated in the drawings are not limited to the information illustrated in the drawings.

The constituent elements of the apparatuses illustrated in the drawings are functionally conceptual, and need not necessarily be physically configured as illustrated in the drawings. That is, specific embodiments of distribution and integration of the respective devices are not limited to those illustrated in the drawings, and all or part of each device can be functionally or physically distributed or integrated in any unit according to various loads, usage conditions, or the like.

The embodiments and the modification examples described above can be combined as appropriate as long as the processing contents do not contradict each other.

In addition, the effects described in the present specification are merely examples and are not limited, and other effects may be obtained.

### [5. Effects According to Present Disclosure]

As described above, a gateway apparatus (the gateway apparatus 100 in the embodiment) according to the present disclosure is a gateway apparatus for connecting a quantum internet and a quantum intranet, which receives information indicating communication quality between a quantum node and another quantum node computed in the quantum node in the quantum intranet, constructs a routing table of the quantum intranet, receives a request from a node in the quantum internet, and references the routing table of the quantum intranet, and transmits, based on the referenced routing table, the request to the quantum node in the quantum intranet.

With this configuration, the gateway apparatus according to the present disclosure constructs the routing table of the quantum intranet, and when receiving the request from the node in the quantum internet, references the routing table of the quantum intranet. In this manner, the gateway apparatus can transmit the request to an appropriate quantum node in the quantum intranet, based on the referenced routing table. Therefore, the gateway apparatus can enable appropriate operation of the quantum network.

A gateway apparatus is a gateway apparatus for connecting a quantum internet and a quantum intranet, which generates quantum entanglement with a quantum node in the quantum internet at time of starting communication of quantum information, measures quality of the quantum entanglement, when the measured quality is normal, continues the communication, and when the measured quality is not normal, shuts off the communication.

With this configuration, the gateway apparatus according to the present disclosure generates the quantum entanglement with the quantum node in the quantum internet at the time of starting communication of the quantum information, measures the quality of the quantum entanglement, when the measured quality is normal, continues the communication, and when the measured quality is not normal, shuts off the communication. In this manner, the gateway apparatus can appropriately perform trust establishment in a quantum communication path. Therefore, the gateway apparatus can enable appropriate operation of the quantum network.

A gateway apparatus is a gateway apparatus for connecting a quantum internet and a quantum intranet, which transmits a message to an adjacent quantum node, receives a response from the adjacent quantum node, requests the adjacent node to obtain information indicating communication quality between the adjacent quantum node and the gateway apparatus, and obtains the information indicating the communication quality between the gateway apparatus and the adjacent quantum node.

With this configuration, the gateway apparatus according to the present disclosure requests the adjacent node to obtain the information indicating the communication quality between the adjacent quantum node and the gateway apparatus, and obtains information indicating communication quality between the gateway apparatus and the adjacent quantum node. In this manner, the gateway apparatus can appropriately determine possibility of participation in the quantum internet. Therefore, the gateway apparatus can enable appropriate operation of the quantum network.

A gateway apparatus is a gateway apparatus for connecting a quantum internet and a quantum intranet, which receives a routing table update message transmitted due to update of a routing table of an adjacent quantum node, and updates the routing table, based on the routing table update message of the adjacent quantum node.

With this configuration, the gateway apparatus according to the present disclosure updates the routing table, based on the routing table update message of the adjacent quantum node. In this manner, the gateway apparatus can appropriately select routing in the quantum internet. Therefore, the gateway apparatus can enable appropriate operation of the quantum network.

A gateway apparatus is a gateway apparatus for connecting a quantum internet and a quantum intranet, which receives a notification of a quantum state generation abnormality from an adjacent quantum node, and notifies a network manager of an error for error correction for a quantum repeater located between the adjacent quantum node and the gateway apparatus.

With this configuration, the gateway apparatus according to the present disclosure, when receiving the notification of the quantum state generation abnormality from the adjacent quantum node, notifies the network manager of the error for error correction for the quantum repeater located between the adjacent quantum node and the gateway apparatus. In this manner, the gateway apparatus can appropriately execute error correction. Therefore, the gateway apparatus can enable appropriate operation of the quantum network.

A gateway apparatus is a gateway apparatus for connecting a quantum internet and a quantum intranet, which requests information including a physical Bell pair generation rate from at least one of two or more quantum nodes generating physical Bell pairs in the quantum intranet, receives the physical Bell pair generation rate from a quantum node in the quantum intranet, when the physical Bell pair generation rate is not a normal value, updates a routing table, and notifies a network manager of a physical Bell pair generation abnormality for error correction for the at least one of the two or more quantum nodes generating the physical Bell pairs.

With this configuration, the gateway apparatus according to the present disclosure receives the physical Bell pair generation rate from the quantum node in the quantum intranet, when the physical Bell pair generation rate is not a normal value, updates the routing table, and notifies the network manager of the physical Bell pair generation abnormality for error correction for the at least one of the two or more quantum nodes generating the physical Bell pairs. In this manner, the gateway apparatus can appropriately perform failure notification. Therefore, the gateway apparatus can enable appropriate operation of the quantum network.

### [6. Hardware Configuration Example]

The gateway apparatus 100, the relay nodes 10, the QPDs 20, and the like described above are implemented by a configuration obtained by appropriately combining a classical computer, a quantum computer, or the like having a configuration as illustrated below, for example. In the following, an example of a hardware configuration of the gateway apparatus 100 will be described. Note that the hardware configuration illustrated below is merely an example, and regarding the hardware configuration of the gateway apparatus 100, the relay nodes 10, the QPDs 20, and the like, any hardware configuration can be employed as long as it is capable of desired processing.

For example, the classical function unit 110 of the gateway apparatus 100 is implemented by a classical computer having a configuration as illustrated below. The classical computer includes a CPU, a RAM, a read only memory (ROM), a hard disk drive (HDD), a classical communication interface, and an input/output interface. The units of the classical computer are connected together via a bus.

The CPU operates based on a program stored in the ROM or the HDD and controls each unit. For example, the CPU loads programs stored in the ROM or the HDD onto the RAM and executes processing operations corresponding to the various programs.

The ROM stores a boot program such as a basic input output system (BIOS) executed by the CPU at the time of activation of the classical computer, a program depending on hardware of the classical computer, and the like.

The HDD is a computer-readable storage medium that non-temporarily stores programs executed by the CPU, data used by the programs, and the like. Specifically, the HDD is a storage medium recording the information processing program according to the present disclosure, which is an example of program data.

The classical communication interface is an interface for the classical computer to connect to an external classical network (for example, the classical internet). For example, the CPU receives data from another device via the classical communication interface and transmits data generated by the CPU to another device via the classical communication interface.

The input/output interface is an interface for connecting an input/output device and the classical computer. For example, the CPU receives data from an input device such as a keyboard and a mouse via the input/output interface. The CPU also transmits data to an output device such as a display, a speaker, a printer, or the like via the input/output interface. The input/output interface may function as a media interface that reads a program or the like stored in a predetermined storage medium (media). The medium is, for example, an optical storage medium such as a digital versatile disc (DVD) or a phase change rewritable disk (PD), a magneto-optical storage medium such as a magneto-optical disk (MO), a tape medium, a magnetic storage medium, a semiconductor memory, or the like.

For example, when the classical computer functions as the gateway apparatus 100 according to the embodiment, the CPU of the classical computer executes the information processing program loaded onto the RAM to implement the functions of the control unit 130 and the like. The HDD stores the information processing program according to the present disclosure and the data in the storage section 120. Note that the CPU reads the program data from the HDD and executes the program, but in another example, the CPU may acquire these programs from another apparatus via the external classical network.

For example, the quantum function unit 150 of the gateway apparatus 100 is implemented by a quantum computer having a configuration as illustrated below. The quantum computer includes a QPU, a quantum communication interface, and the like. The units of the quantum computer are connected together via any configuration such as a communication path.

The QPU executes the function of quantum computing and the function of the quantum memory. The QPU operates according to predetermined control, and performs processing such as quantum computing and storing of the quantum states. The quantum communication interface is an interface for the quantum computer to connect to an external quantum network (for example, the quantum internet). For example, the QPU receives data from another device via the quantum communication interface and transmits data generated by the QPU to another device via the quantum communication interface.

Note that the present technology can also employ the following configurations.
(1) A gateway apparatus for connecting a quantum internet and a quantum intranet, wherein
   the gateway apparatus is configured to
   receive information indicating communication quality between a quantum node and another quantum node, the communication quality being computed in the quantum node in the quantum intranet,
   construct a routing table of the quantum intranet,
   receive a request from a node in the quantum internet, and
   reference the routing table of the quantum intranet and transmit, based on the referenced routing table, the request to the quantum node in the quantum intranet.
(2) A gateway apparatus for connecting a quantum internet and a quantum intranet, wherein
   the gateway apparatus is configured to
   generate quantum entanglement with a quantum node in the quantum internet at time of starting communication of quantum information,
   measure quality of the quantum entanglement,
   continue the communication when the measured quality is normal, and
   shut off the communication when the measured quality is not normal.
(3) A gateway apparatus for connecting a quantum internet and a quantum intranet, wherein
   the gateway apparatus is configured to
   transmit a message to an adjacent quantum node,
   receive a response from the adjacent quantum node,
   request the adjacent node to obtain information indicating communication quality between the adjacent quantum node and the gateway apparatus, and
   obtain information indicating communication quality between the gateway apparatus and the adjacent quantum node.
(4) A gateway apparatus for connecting a quantum internet and a quantum intranet, wherein
   the gateway apparatus is configured to
   receive a routing table update message transmitted due to update of a routing table of an adjacent quantum node, and
   update the routing table, based on the routing table update message of the adjacent quantum node.
(5) A gateway apparatus for connecting a quantum internet and a quantum intranet, wherein
   the gateway apparatus is configured to
   receive a notification of a quantum state generation abnormality from an adjacent quantum node, and
   notify a network manager of an error for error correction for a quantum repeater located between the adjacent quantum node and the gateway apparatus.
(6) A gateway apparatus for connecting a quantum internet and a quantum intranet, wherein
   the gateway apparatus is configured to
   request information including a physical Bell pair generation rate from at least one of two or more quantum nodes generating physical Bell pairs in the quantum intranet,
   receive the physical Bell pair generation rate from a quantum node in the quantum intranet,
   update a routing table when the physical Bell pair generation rate is not a normal value, and
   notify a network manager of a physical Bell pair generation abnormality for error correction for the at least one of the two or more quantum nodes generating the physical Bell pairs.

### Reference Signs List

1 Information processing system (quantum classical hybrid system)
2 Quantum data center
10 Relay node
10a QRR
10b EQRR
10c IQR
20 QPD
30 CLT
100 Gateway apparatus (QGW)
110 Classical function unit (classical computer unit)
120 Storage section
130 Control unit
140 Communication unit
150 Quantum function unit (quantum computer unit)
160 Quantum storage section
170 Quantum control unit
180 Quantum communication unit
CN Classical network
CN1 Classical intranet
CN2 Classical internet
QN Quantum network
QN1 Quantum intranet
QN2 Quantum internet

## Claims

1. A gateway apparatus for connecting a quantum internet and a quantum intranet, wherein
the gateway apparatus is configured to
receive information indicating communication quality between a quantum node and another quantum node, the communication quality being computed in the quantum node in the quantum intranet,
construct a routing table of the quantum intranet, receive a request from a node in the quantum internet, and
reference the routing table of the quantum intranet and transmit, based on the referenced routing table, the request to the quantum node in the quantum intranet.

2. A gateway apparatus for connecting a quantum internet and a quantum intranet, wherein
the gateway apparatus is configured to
generate quantum entanglement with a quantum node in the quantum internet at time of starting communication of quantum information,
measure quality of the quantum entanglement,
continue the communication when the measured quality is normal, and
shut off the communication when the measured quality is not normal.

3. A gateway apparatus for connecting a quantum internet and a quantum intranet, wherein
the gateway apparatus is configured to
transmit a message to an adjacent quantum node,
receive a response from the adjacent quantum node,
request the adjacent node to obtain information indicating communication quality between the adjacent quantum node and the gateway apparatus, and
obtain information indicating communication quality between the gateway apparatus and the adjacent quantum node.

4. A gateway apparatus for connecting a quantum internet and a quantum intranet, wherein
the gateway apparatus is configured to
receive a routing table update message transmitted due to update of a routing table of an adjacent quantum node, and
update the routing table, based on the routing table update message of the adjacent quantum node.

5. A gateway apparatus for connecting a quantum internet and a quantum intranet, wherein
the gateway apparatus is configured to
receive a notification of a quantum state generation abnormality from an adjacent quantum node, and
notify a network manager of an error for error correction for a quantum repeater located between the adjacent quantum node and the gateway apparatus.

6. A gateway apparatus for connecting a quantum internet and a quantum intranet, wherein
the gateway apparatus is configured to
request information including a physical Bell pair generation rate from at least one of two or more quantum nodes generating physical Bell pairs in the quantum intranet,
receive the physical Bell pair generation rate from a quantum node in the quantum intranet,
update a routing table when the physical Bell pair generation rate is not a normal value, and
notify a network manager of a physical Bell pair generation abnormality for error correction for the at least one of the two or more quantum nodes generating the physical Bell pairs.
